# EUROPEAN PATENT SPECIFICATION

(11) **EP 3 091 807 B1**
(45) Date of publication and mention of the grant of the patent: **24.07.2019**
(21) Application number: 15743024.0
(22) Date of filing: 23.01.2015
(51) Int. Cl.: H04W 72/04, H04W 72/12, H04W 72/14, H04W 24/02, H04W 88/02

(54) **TRANSMISSION METHOD AND USER EQUIPMENT FOR ABSOLUTE GRANT VALUE**
ÜBERTRAGUNGSVERFAHREN UND BENUTZERGERÄT FÜR ABSOLUTE-GRANT-WERT
PROCÉDÉ D'ÉMISSION ET ÉQUIPEMENT D'UTILISATEUR POUR VALEUR D'ATTRIBUTION ABSOLUE

(30) Priority: 29.01.2014 CN 201410043923; 01.04.2014 CN 201410130001; 08.05.2014 CN 201410193799; 16.05.2014 CN 201410208807
(43) Date of publication of application: 09.11.2016
(73) Proprietor: Huawei Technologies Co., Ltd., Longgang District Shenzhen, Guangdong 518129 (CN)
(72) Inventor: JIAO, Shurong, Shenzhen Guangdong 518129 (CN); HUA, Meng, Shenzhen Guangdong 518129 (CN); ZHAO, Yueying, Shenzhen Guangdong 518129 (CN); TIE, Xiaolei, Shenzhen Guangdong 518129 (CN); HU, Wenquan, Shenzhen Guangdong 518129 (CN); WANG, Fan, Shenzhen Guangdong 518129 (CN)
(74) Representative: Gill Jennings & Every LLP
(86) International application number: PCT/CN2015/071470
(87) International publication number: WO 2015/113480

(56) References cited:
- EP-A1- 2 076 084
- WO-A1-2013/185833
- WO-A2-2008/024889
- CN-A- 101 420 754
- CN-A- 101 772 039
- CN-A- 103 262 623
- CN-A- 103 379 631

## Description

### TECHNICAL FIELD

The present invention relates to the field of communications technologies, and in particular, to a method for transmitting an absolute grant value and a user equipment.

### BACKGROUND

In a conventional Wideband Code Division Multiple Access (WCDMA for short) system, a network side device delivers a scheduling grant (SG for short) value to achieve an objective of scheduling uplink transmit power of a user, and a physical meaning of the scheduling grant value is an enhanced-dedicated physical data channel (E-DPDCH for short) to dedicated physical control channel (DPCCH for short) transmit power offset. The scheduling grant value may be classified into two types: an absolute grant (AG for short) value and a relative grant (RG for short) value, where an enhanced-absolute grant channel (E-AGCH for short) is used to carry the AG value, and an enhanced-relative grant channel (E-RGCH for short) is used to carry the RG value.

In the prior art, a network side device may deliver an AG of a user equipment (UE for short) on a conventional E-AGCH or a new E-AGCH at a moment; each UE simultaneously listens on the foregoing two channels; when detecting an AG that belongs to the UE itself on the conventional E-AGCH or the new E-AGCH, the UE sends data to the network side device according to the AG on the channel; and when detecting an AG of another UE on the new E-AGCH, the UE stops data transmission that is performed currently.

However, in the prior art, the network side device stops transmission of all UEs after sending an AG to a UE1 through the new E-AGCH, and then starts data transmission by sending an AG to another UE2 at a next moment, which may cause data transmission interruption of the UE2.

EP 2076084 describes data transmission using a cyclic data structure.

### SUMMARY

The present invention provides a method for transmitting an absolute grant value and a user equipment, which are used to solve a problem in the prior art that data transmission interruption of a UE2 may be caused because a network side device stops transmission of all UEs after sending an AG to a UE1 through a new E-AGCH and then starts data transmission by sending an AG to another UE2 at a next moment.

Aspects of the present invention are provided in the claims.

According to the method for transmitting an absolute grant value and the user equipment in embodiments of the present invention, the user equipment receives a conventional enhanced-absolute grant channel E-AGCH sent by a network side device, and receives a grant value detecting E-AGCH sent by the network side device; and if the user equipment determines that at least one channel of the conventional E-AGCH and the grant value detecting E-AGCH carries an absolute grant AG value of the user equipment, the user equipment performs a data transmission operation according to the AG. By using the technical solutions provided by the embodiments of the present invention, continuity of data transmission of the user equipment can be ensured, and transmission efficiency is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying the user equipment, controlling, by the user equipment, the data transmission according to the first AG information of the user equipment includes:
if the user equipment detects that the conventional E-AGCH carries the first AG information of the user equipment, controlling, by the user equipment, the data transmission according to the first AG information of the user equipment; and
if the user equipment detects that the conventional E-AGCH does not carry the first AG information of the user equipment, and detects that the grant value detecting E-AGCH carries the first AG information of the user equipment, controlling, by the user equipment, the data transmission according to the first AG information.

In a third possible implementation manner, according to the first aspect, the detecting, by the user equipment, absolute grant AG information carried on at least one channel of the conventional E-AGCH and the grant value detecting E-AGCH, and controlling current data transmission of the user equipment according to a detection result includes:
if the user equipment detects that the conventional E-AGCH does not carry the first AG information of the user equipment and that the grant value detecting E-AGCH carries second AG information of another user equipment except the user equipment;
skipping performing, by the user equipment, the data transmission.

A second aspect of the present invention provides a user equipment, including:
a receiving module, configured to receive a conventional enhanced-absolute grant channel E-AGCH and a newly-added grant value detecting E-AGCH that are sent by a network side device; and
a detecting module, configured to detect absolute grant AG information carried on at least one channel of the conventional E-AGCH and the grant value detecting E-AGCH, and control data transmission of the user equipment according to a detection result.

In a first possible implementation manner, according to the second aspect, the detecting module is specifically configured to:
if it is detected that the at least one channel of the conventional E-AGCH and the grant value detecting E-AGCH carries first AG information of the user equipment,
control the data transmission according to the first AG information of the user equipment.

In a second possible implementation manner, according to the first possible implementation manner, the detecting module is specifically configured to:
if it is detected that the conventional E-AGCH carries the first AG information of the user equipment, control the data transmission according to the first AG information of the user equipment; and
if it is detected that the conventional E-AGCH does not carry the first AG information of the user equipment, and it is detected that the grant value detecting E-AGCH carries the first AG information of the user equipment, control the data transmission according to the first AG information.

In a third possible implementation manner, according to the second aspect, the detecting module is specifically configured to:
if it is detected that the conventional E-AGCH does not carry the first AG information of the user equipment and that the grant value detecting E-AGCH carries second AG information of another user equipment except the user equipment,
skip performing the data transmission.

According to the method for transmitting an absolute grant value and the user equipment in embodiments of the present invention, the user equipment receives a conventional enhanced-absolute grant channel E-AGCH sent by a network side device, and receives a grant value detecting E-AGCH sent by the network side device; and if the user equipment determines that at least one channel of the conventional E-AGCH and the grant value detecting E-AGCH carries an absolute grant AG value of the user equipment, the user equipment performs a data transmission operation according to the AG. By using the technical solutions provided by the embodiments of the present invention, continuity of data transmission of the user equipment can be ensured, and transmission efficiency is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for transmitting an absolute grant value according to an embodiment of the present invention;
FIG. 2 is a diagram of an interaction process between a network side device and a user equipment according to an embodiment of the present invention;
FIG. 3a is a schematic diagram of scheduling four user equipments in the prior art;
FIG. 3b is a schematic diagram of scheduling four user equipments according to an embodiment of the present invention;
FIG. 4 is a schematic structural diagram of a user equipment according to an embodiment of the present invention;
FIG. 5 is a schematic structural diagram of another user equipment according to an embodiment of the present invention;
FIG. 6 is a flowchart of another method for transmitting an absolute grant value according to an embodiment of the present invention;
FIG. 7 is a schematic structural diagram of still another user equipment according to an embodiment of the present invention;
FIG. 8 is a schematic structural diagram of yet another user equipment according to an embodiment of the present invention;
FIG. 9 is a flowchart of still another method for transmitting an absolute grant value according to an embodiment of the present invention;
FIG. 10 is a schematic structural diagram of still yet another user equipment according to an embodiment of the present invention;
FIG. 11 is a flowchart of yet another method for transmitting an absolute grant value according to an embodiment of the present invention;
FIG. 12 is a flowchart of still yet another method for transmitting an absolute grant value according to an embodiment of the present invention; and
FIG. 13 is a flowchart of a further method for transmitting an absolute grant value according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Technologies described in this specification may be applied to various communications systems, for example, current 2G and 3G communications systems and a next-generation communications system, for example, a Global System for Mobile Communications (GSM), a Code Division Multiple Access (CDMA) system, a Time Division Multiple Access (TDMA) system, a Wideband Code Division Multiple Access (WCDMA) system, a Frequency Division Multiple Access (FDMA) system, an Orthogonal Frequency-Division Multiple Access (OFDMA) system, a single-carrier FDMA (SC-FDMA) system, a General Packet Radio Service (GPRS) system, a Long Term Evolution (LTE) system, and other communications systems.

A user equipment involved in this application may be a wireless terminal or a wired terminal. The wireless terminal may refer to a device that provides voice and/or data connectivity for a user, a handheld device with a wireless connection function, or another processing device connected to a wireless modem. The wireless terminal may communicate with one or more core networks through a radio access network (RAN,). The wireless terminal may be a mobile terminal, for example, a mobile phone (also referred to as a "cellular" phone) or a computer with a mobile terminal, and may be, for example, a portable, pocket-sized, handheld, computer built-in, or in-vehicle mobile apparatus, which exchanges voice and/or data with the radio access network. For example, it may be a device such as a personal communication service (PCS) phone, a cordless telephone set, a Session Initiation Protocol (SIP) phone, a wireless local loop (WLL) station, or a personal digital assistant (PDA). The wireless terminal may also be referred to as a system, a subscriber unit, a subscriber station, a mobile station, a mobile terminal, a remote station, an access point, a remote terminal, an access terminal, a user terminal, a user agent, a user device, or a user equipment.

A network side device involved in this application may be a base station, a radio network controller (RNC), or the like, or may be a functional module in the foregoing various devices on a radio access network side.

The base station (for example, an access point) may be a device that communicates with the wireless terminal through one or more sectors on an air interface on an access network. The base station may be configured to perform mutual conversion between a received air frame and an IP packet, serving as a router between the wireless terminal and another part of the access network, where the another part of the access network may include an Internet Protocol (IP) network. The base station may further coordinate attribute management on the air interface. For example, the base station may be a base station (BTS, Base Transceiver Station) in the GSM or the CDMA, or may be a base station (NodeB) in the WCDMA, or may be an evolved base station (NodeB, eNB, or e-NodeB, evolved Node B) in the LTE, which is not limited in this application.

The base station controller may be a base station controller (BSC, base station controller) in the GSM or the CDMA, or may be a radio network controller (RNC, Radio Network Controller) in the WCDMA, which is not limited in this application.

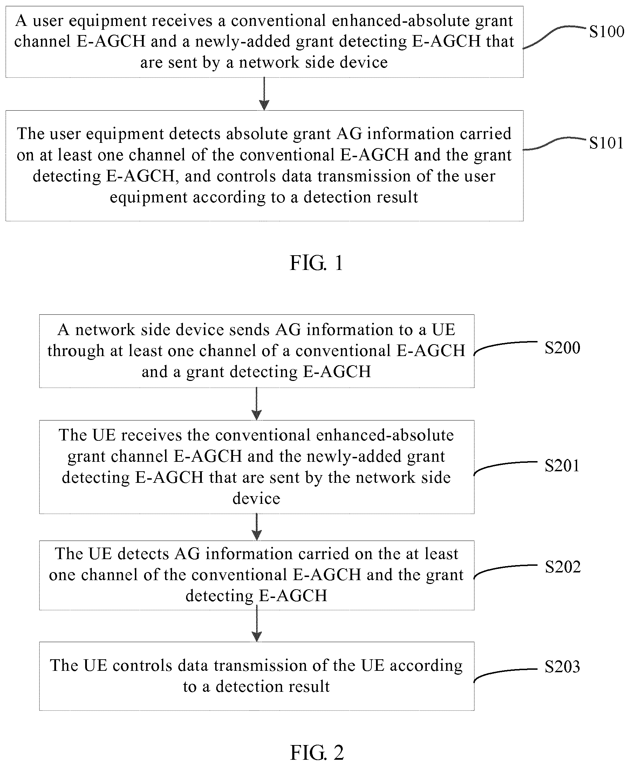

FIG. 1 is a flowchart of a method for transmitting an absolute grant value according to an embodiment of the present invention. In this embodiment, a user equipment receives two channels, that is, a conventional E-AGCH and a grant value detecting E-AGCH, sent by a network side device; and when determining that at least one channel of the conventional E-AGCH and the grant value detecting E-AGCH carries an AG of the user equipment, the user equipment performs a data transmission operation according to the AG. As shown in FIG. 1, the method for transmitting an absolute grant value includes:
Step S100: A user equipment receives a conventional enhanced-absolute grant channel E-AGCH and a newly-added grant value detecting E-AGCH that are sent by a network side device.
Step S101: The user equipment detects absolute grant AG information carried on the at least one channel of the conventional E-AGCH and the grant value detecting E-AGCH, and controls data transmission of the user equipment according to a detection result.

Specifically, the UE may first receive the conventional enhanced-absolute grant channel E-AGCH sent by the network side device, where the conventional enhanced-absolute grant channel E-AGCH is referred to as a conventional E-AGCH for short below; and receive the newly-added grant value detecting E-AGCH sent by the network side device, where the newly-added grant value detecting E-AGCH is referred to as a grant value detecting E-AGCH for short below. It should be noted that, the conventional E-AGCH herein is the conventional E-AGCH in the prior art, and the grant value detecting E-AGCH is the new E-AGCH in the background. The foregoing conventional E-AGCH and grant value detecting E-AGCH are channels that are used by the network side device to send the AG information to the UE, and may occupy a same time-frequency resource or occupy different time-frequency resources, which is not limited herein.

Further, after receiving the foregoing two channels, that is, the conventional E-AGCH and the grant value detecting E-AGCH, the UE may detect the absolute grant AG information carried on the at least one channel of the conventional E-AGCH and the grant value detecting E-AGCH, and control the data transmission of the UE according to the detection result.

Optionally, if the UE detects that the conventional E-AGCH carries first AG information, where the foregoing first AG information represents AG information of the UE, the UE controls the data transmission according to the first AG information on the conventional E-AGCH; if the UE does not detect the first AG information on the conventional E-AGCH, and detects that the grant value detecting E-AGCH carries the first AG information, the UE controls the data transmission according to the first AG information on the grant value detecting E-AGCH; and if the UE detects that both the conventional E-AGCH and the grant value detecting E-AGCH carry the AG information of the UE itself, the UE may control the data transmission separately according to the first AG information carried on the two E-AGCHs, or may control the data transmission only according to the first AG information carried on the conventional E-AGCH, and if the UE is performing the data transmission, the UE may also control the data transmission according to the first AG information carried on an E-AGCH on which the data transmission that is being performed by the UE currently is started.

In this embodiment, a UE receives a conventional enhanced-absolute grant channel E-AGCH and a newly-added grant value detecting E-AGCH that are sent by a network side device; and detects absolute grant AG information carried on at least one channel of the conventional E-AGCH and the grant value detecting E-AGCH, and controls data transmission of the UE according to a detection result. Therefore, continuity of the data transmission can be ensured, and transmission efficiency is improved.

FIG. 2 is a diagram of an interaction process between a network side device and a user equipment according to an embodiment of the present invention. In this embodiment, the network side device sends AG information to the user equipment through at least one channel of a conventional E-AGCH and a grant value detecting E-AGCH, and the user equipment simultaneously listens on the foregoing two E-AGCHs, detects the foregoing two E-AGCHs, and controls data transmission of the user equipment according to a detection result. As shown in FIG. 2, the interaction process includes the following steps:
Step S200: A network side device sends AG information to a UE through at least one channel of a conventional E-AGCH and a grant value detecting E-AGCH.

The foregoing step is performed by the network side device. In practice, the network side device may be a device that can communicate with the UE, such as a base station or a relay.

Specifically, when scheduling the UE, the network side device may deliver a scheduling permission value to the UE, to achieve an objective of scheduling uplink transmit power of the UE. In this embodiment, for any UE, the network side device may deliver the AG information to the UE through the at least one channel of the conventional E-AGCH and the grant value detecting E-AGCH. That is, the network side device may deliver the AG information to the UE through the conventional E-AGCH, may deliver the AG information to the UE through the grant value detecting E-AGCH, or may deliver the AG information to the UE through the conventional E-AGCH and the grant value detecting E-AGCH.

Further, for any UE, the foregoing AG information may be AG information of the UE itself, or may be AG information of another UE except the UE.

It should be noted that, in practice, the foregoing two E-AGCHs are channels that are used by the network side device to send the AG information to the UE, and may occupy a same time-frequency resource or occupy different time-frequency resources, which is not limited herein. Optionally, in a WCDMA system, the network side device may send the foregoing conventional E-AGCH and grant value detecting E-AGCH by using an uplink high rise over thermal (Rise Over Thermal, RoT for short) dedicated secondary carrier.

Step S201: The UE receives the conventional enhanced-absolute grant channel E-AGCH and the newly-added grant value detecting E-AGCH that are sent by the network side device.

Description of the step is the same as that of step S100, and details are not described herein again.

Step S202: The UE detects AG information carried on the at least one channel of the conventional E-AGCH and the grant value detecting E-AGCH.

Specifically, because the network side device sends the AG information to the UE through the at least one channel of the conventional E-AGCH and the grant value detecting E-AGCH, after receiving the foregoing two E-AGCHs, the UE may detect the AG information on the foregoing two E-AGCHs.

Further, because each UE has a dedicated identity (Identity, ID for short) for detecting an AG of the UE, the UE may decode the foregoing two E-AGCHs, to detect whether there is AG information that belongs to the UE on the two E-AGCHs. Specifically, during detection, the UE may detect the conventional E-AGCH and the grant value detecting E-AGCH separately.

For the conventional E-AGCH, the UE only needs to detect whether there is the AG information that belongs to the UE on the conventional E-AGCH. If the UE fails in the decoding, it indicates that the conventional E-AGCH does not carry first AG information of the UE; and if the UE succeeds in the decoding, it indicates that the conventional E-AGCH carries the first AG information of the UE. It should be noted that, that the UE detects that the conventional E-AGCH does not carry the first AG information of the UE includes two situations: the conventional E-AGCH does not carry AG information, or the conventional E-AGCH carries AG information, but the AG information is not the foregoing first AG information but is second AG information of another UE except the UE.

For the grant value detecting E-AGCH, the UE may first detect whether there is AG information on the grant value detecting E-AGCH, and if there is AG information on the grant detecting E-AGCH, the UE further detects whether the AG information is the first AG information of the UE itself.

Specifically, the UE may first perform information detection on the grant value detecting E-AGCH, for example, detect a signal-to-noise ratio of the grant value detecting E-AGCH. If the signal-to-noise ratio is higher than a preset threshold, it is considered that the grant value detecting E-AGCH carries the AG information, and if the signal-to-noise ratio is lower than the foregoing preset threshold, it is considered that the grant value detecting E-AGCH does not carry the AG information. When the UE detects that the grant value detecting E-AGCH carries the AG information, the UE decodes the grant value detecting E-AGCH. If the UE fails in the decoding, it indicates that the grant value detecting E-AGCH does not carry the first AG information of the UE. Because the grant value detecting E-AGCH carries the AG information in this case, the UE may determine that the grant value detecting E-AGCH carries the second AG information of the another UE except the UE in this case. If the UE succeeds in the decoding, it indicates that the grant value detecting E-AGCH carries the first AG information of the UE.

For the grant value detecting E-AGCH, the UE may also first detect whether the AG information on the grant value detecting E-AGCH is the first AG information of the UE, and if the AG information on the grant detecting E-AGCH is not the first AG information of the UE itself, the UE further detects whether the AG information is the second AG information of the another UE except the UE.

Specifically, the UE may first decode the grant value detecting E-AGCH, if the UE succeeds in the decoding, it indicates that the grant value detecting E-AGCH carries the first AG information of the UE; and if the UE fails in the decoding, it indicates that the grant value detecting E-AGCH does not carry the first AG information of the UE. In this case, the UE may further detect whether the AG information is the second AG information of the another UE except the UE. For example, the UE may further perform information detection on the grant value detecting E-AGCH, for example, detect a signal-to-noise ratio of the grant value detecting E-AGCH. If the signal-to-noise ratio is higher than a preset threshold, it indicates that AG information on the grant value detecting E-AGCH is the second AG information of the another UE except the UE; and if the signal-to-noise ratio is lower than the foregoing preset threshold, it indicates that the grant value detecting E-AGCH does not carry the AG information.

Certainly, an order in which the UE detects the foregoing two E-AGCH channels is not limited herein. Optionally, in practice, the UE may first detect AG information carried on the conventional E-AGCH and then detect AG information carried on the grant value detecting E-AGCH according to a descending order of priorities of the conventional E-AGCH and the grant value detecting E-AGCH, if the detection result is that the conventional E-AGCH carries the first AG information that belongs to the UE, the UE directly controls the data transmission according to an AG index value in the first AG information; and if the detection result is that the conventional E-AGCH does not carry the first AG information that belongs to the UE, the UE controls the data transmission according to a detection result on the grant value detecting E-AGCH.

Optionally, the UE may also detect the AG information on the two E-AGCHs separately, and determine a data transmission operation of the UE according to a detection result, and an execution sequence is not limited herein. If the UE detects the AG information of the UE on both the two E-AGCHs, or detects the AG information of the UE on the conventional E-AGCH and detects AG information of another UE on the grant value detecting E-AGCH, or detects the AG information of the UE on the conventional E-AGCH and does not detect the AG information on the grant value detecting E-AGCH, the UE performs a data transmission operation according to the AG information on the conventional E-AGCH without paying attention to a detection result on the grant value detecting E-AGCH.

Step S203: The UE controls data transmission of the UE according to a detection result.

Specifically, after detecting the conventional E-AGCH and the grant value detecting E-AGCH, the UE may control the data transmission of the UE according to the detection result.

The following describes in detail, according to different results on detection performed by the UE on the foregoing two E-AGCHs in step S202, a process of controlling, by the UE, the data transmission of the UE:
(1) If the UE detects that the at least one channel of the conventional E-AGCH and the grant detecting E-AGCH carries the first AG information of the UE, the UE controls the data transmission according to the foregoing first AG information.
   Specifically, if the UE detects that the conventional E-AGCH carries the first AG information of the UE, the UE controls the data transmission according to the foregoing first AG information; if the UE detects that the conventional E-AGCH does not carry the foregoing first AG information, and detects that the grant value detecting E-AGCH carries the foregoing first AG information, the UE controls the data transmission according to the foregoing first AG information; and if the UE detects that the conventional E-AGCH carries the first AG information of the UE, and detects that the grant value detecting E-AGCH also carries the first AG information of the UE, optionally, the UE may control the data transmission according to the first AG information carried on the conventional E-AGCH without paying attention to a detection result on the grant value detecting E-AGCH.
   For example, the controlling the data transmission according to the first AG information refers to that, if an AG value index in the first AG information is 0 or 1, it indicates stopping the data transmission, that is, if the UE is currently performing the data transmission, the data transmission is stopped, and if the UE does not perform the data transmission, the data transmission is still not performed; if the AG value index in the first AG information is any integer between 2 and 31, it indicates different transmit power offsets; if the UE is performing the data transmission, the UE adjusts a transmit power offset of the current data transmission according to the foregoing first AG information; and if the UE does not perform the data transmission, the UE starts the data transmission according to a transmit power offset corresponding to the foregoing AG.
(2) If the UE detects that the conventional E-AGCH does not carry the first AG information of the UE and that the grant value detecting E-AGCH carries the second AG information of the another UE except the UE, the UE does not perform the data transmission.

Specifically, if the UE detects that grant value detecting E-AGCH of the UE carries the second AG information of the another UE except the UE and that the conventional E-AGCH does not carry the AG information, the UE does not perform the data transmission; and if the UE detects that grant value detecting E-AGCH of the UE carries the second AG information of the another UE except the UE and that the conventional E-AGCH carries the second AG information of the another UE except the UE, the UE does not perform the data transmission.

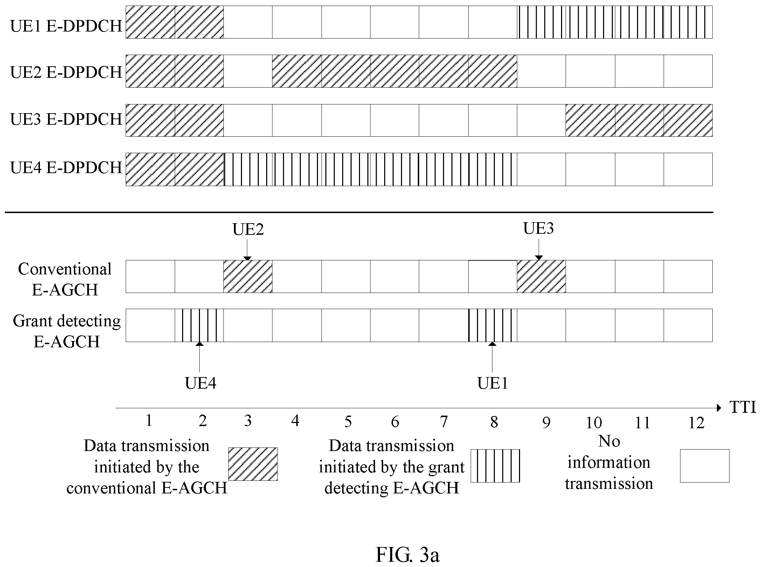

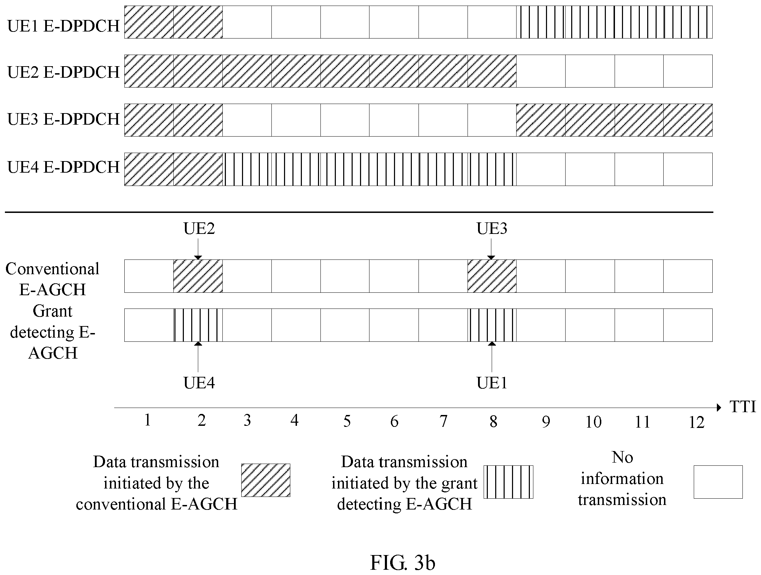

It should be noted that, that the UE does not perform the data transmission refers to that, if the UE is currently performing the data transmission, the data transmission is stopped, and if the UE does not perform the data transmission, the data transmission is still not performed. The foregoing interaction process between the network side device and the user equipment is described below by using an example. FIG. 3a is a schematic diagram of scheduling four user equipments in the prior art, and FIG. 3b is a schematic diagram of scheduling four user equipments according to an embodiment of the present invention. In FIG. 3a and FIG. 3b, 1 to 12 on a horizontal axis in the figures represent different timeslots, a network side device needs to schedule four UEs, that is, a UE1, a UE2, a UE3, and a UE4, data transmission corresponding to AG information received from a conventional E-AGCH is represented by using an inclined-stripe square, data transmission corresponding to AG information received from a grant value detecting E-AGCH is represented by using a cross-stripe square, a blank square on an E-DPDCH represents that a UE does not transmit data, and a blank square on an E-AGCH represents that the network side device does not send AG information. It should be noted that, the inclined-stripe square only represents that the data transmission of the UE is started by the AG information, received from the conventional E-AGCH, of the UE, but does not represent that an E-DPDCH to DPCCH transmit power offset thereof keeps unchanged. Similarly, the cross-stripe square only represents that the data transmission of the UE is started by the AG information, received from the grant value detecting E-AGCH, of the UE, but does not represent that an E-DPDCH to DPCCH transmit power offset thereof keeps unchanged. At the beginning, all the four UEs start data transmission according to respective AG information received from the conventional E-AGCH. That is, in a first timeslot and the second timeslot, the data transmission of all the foregoing four UEs is represented by using inclined-stripe squares.

As shown in FIG. 3a, in the second timeslot, the network side device sends AG information of the UE4 through the grant value detecting E-AGCH. It can be known according to the description in the background that, in the third timeslot, the UE1, the UE2, and the UE3 receives AG information of another UE from the grant value detecting E-AGCH, that is, a new E-AGCH, the UE1, and therefore, the UE2, and the UE3 stop their own data transmission. Therefore, in the third timeslot, only the UE4 performs data transmission according to the AG information received by the UE4 in the second timeslot. In this case, if the network side device needs to schedule the UE2, the network side device can re-start data transmission of the UE2 only by delivering AG information of the UE2 in the third timeslot through the conventional E-AGCH. However, for the UE2, the UE2 does not perform data transmission in the third timeslot. Therefore, a problem of data transmission interruption occurs.

Because the network side device does not send AG information in the following third to seventh timeslots, the UEs keep their current data transmission operations unchanged.

In the eighth timeslot, the network side device continues to send AG information of the UE1 through the grant value detecting E-AGCH, and data transmission of the UE1 may be re-started in a next timeslot. At the same time, the UE2 and the UE4 receive AG information of another UE from the grant value detecting E-AGCH, and therefore, the UE2 and the UE4 stop their own data transmission. In addition, in this case, if it further needs to schedule the UE3, AG information of the UE3 can only be delivered in the ninth timeslot through the conventional E-AGCH. However, for the UE3, the UE3 does not perform data transmission in the ninth timeslot. That is, only one UE performs data transmission in the timeslot. In conclusion, when the network side device performs UE switching in the third timeslot and the ninth timeslot, that is, when the UE2 and the UE4 are scheduled in the third timeslot, and the UE1 and the UE3 are scheduled in the ninth timeslot, data transmission of the UEs is interrupted.

Relatively, as shown in FIG. 3b, in the second timeslot, the network side device sends an AG information of the UE2 through the conventional E-AGCH, and sends AG information of the UE4 through the grant value detecting E-AGCH. Then, when the four UEs receive the foregoing two pieces of AG information in this case, the UEs have different data transmission operations separately. For the UE1 and the UE3, because the AG information on the two channels does not belong to the UE1 or the UE3, it can be known from the description of (2) of step S203 that, both the UE1 and the UE3 stops data transmission in a next timeslot. For the UE2, it can be known from the description of (1) of step S203 that, the UE2 receives its own AG information from the conventional E-AGCH in this case, and the AG information on the grant value detecting E-AGCH does not belong to the UE2; therefore, the UE2 performs data transmission according to the AG information on the conventional E-AGCH, that is, continues, in a next timeslot, the data transmission performed in the second timeslot. However, a transmit power offset of the UE2 during the data transmission is a transmit power offset corresponding to the AG information received by the UE2 in the second timeslot. For the UE4, it can be known from the description of (1) of step S203 that, the UE4 receives its own AG information from the grant value detecting E-AGCH, and therefore, the UE4 performs data transmission in a next timeslot according to the AG information received by the UE4 in the second timeslot.

Because the network side device does not send AG information in the following third to seventh timeslots, the UEs keep their current data transmission operations unchanged.

In the eighth timeslot, the network side device sends an AG information of the UE3 through the conventional E-AGCH, and sends AG information of the UE1 through the grant value detecting E-AGCH. Then, when the four UEs receive the foregoing two pieces of AG information in this case, the UEs have different data transmission operations separately. For the UE1, because the UE1 only receives its own AG information from the grant value detecting E-AGCH, and stops data transmission in the third timeslot, the UE1 re-starts the data transmission in a next timeslot according to the AG information. For the UE2 and the UE4, because the AG information on the two channels does not belong to the UE2 or the UE4 in this case, it can be known from the foregoing description that, the UE2 stops the data transmission in a next timeslot. For the UE3, the UE3 receives its own AG information from the conventional E-AGCH, the AG information on the grant value detecting E-AGCH does not belong to the UE3, and the UE3 stops the data transmission in the third timeslot; therefore, the UE3 performs the data transmission according to the AG information on the conventional E-AGCH, that is, re-starts the data transmission in a next timeslot according to the AG information.

It should be noted that, the four UEs in the foregoing example may be any UEs in a network, which is not limited herein. In addition, in the solution described in the example, the network side device may schedule the UE2 and the UE4 in the third timeslot, or switch the UE2 and the UE4 to the UE3 and the UE1 in the ninth timeslot. In practice, the network side device may select, according to an actual situation, to send AG information of a UE on the foregoing two E-AGCHs, to achieve an objective of flexibly scheduling UEs.

It can be seen from the foregoing example that, the network side device sends the AG information of the UE2 and the AG information of the UE4 to the UE2 and the UE4 respectively in the second timeslot through the conventional E-AGCH and the grant value detecting E-AGCH, and a priority rule between different E-AGCHs is pre-defined, so that both the UE2 and the UE4 can perform data transmission according to their own AG information without data transmission interruption. That is, there is no idle timeslot during the data transmission of the UE2 and the UE4. Similarly, the network side device sends the AG information of the UE3 and the AG information of the UE1 to the UE3 and the UE1 respectively in the eighth timeslot through the conventional E-AGCH and the grant value detecting E-AGCH, so as to ensure that both the UE3 and the UE1 can perform data transmission according to their own AG information without data transmission interruption when user equipments are switched from the UE2 and the UE4 to the UE3 and the UE1, thereby ensuring continuity of the data transmission of the user equipments and improving transmission efficiency.

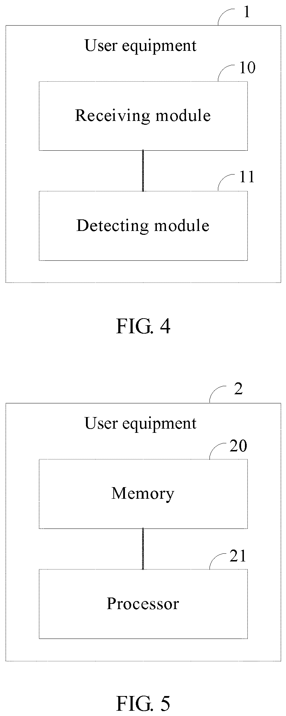

FIG. 4 is a schematic structural diagram of a user equipment according to an embodiment of the present invention. As shown in FIG. 4, the user equipment 1 includes: a receiving module 10 and a detecting module 11.

Specifically, the receiving module 10 is configured to receive a conventional enhanced-absolute grant channel E-AGCH and a newly-added grant value detecting E-AGCH that are sent by a network side device; and the detecting module 11 is configured to detect absolute grant AG information carried on at least one channel of the conventional E-AGCH and the grant value detecting E-AGCH, and control data transmission of the user equipment according to a detection result.

Further, the detecting module 11 is specifically configured to: if it is detected that the at least one channel of the conventional E-AGCH and the grant value detecting E-AGCH carries first AG information of the user equipment, control the data transmission according to the first AG information of the user equipment.

Further, the detecting module 11 is specifically configured to: if it is detected that the conventional E-AGCH carries the first AG information of the user equipment, control the data transmission according to the first AG information of the user equipment; and if it is detected that the conventional E-AGCH does not carry the first AG information of the user equipment, and it is detected that the grant value detecting E-AGCH carries the first AG information of the user equipment, control the data transmission according to the first AG information.

Further, the detecting module 11 is specifically configured to: if it is detected that the conventional E-AGCH does not carry the first AG information of the user equipment and that the grant value detecting E-AGCH carries second AG information of another user equipment except the user equipment, skip performing the data transmission.

Further, the detecting module 11 is specifically configured to: first detect AG information carried on the conventional E-AGCH and then detect AG information carried on the grant value detecting E-AGCH according to a descending order of priorities of the conventional E-AGCH and the grant value detecting E-AGCH.

In this embodiment, a user equipment 1 receives a conventional enhanced-absolute grant channel E-AGCH and a newly-added grant value detecting E-AGCH that are sent by a network side device; and detects absolute grant AG information carried on at least one channel of the conventional E-AGCH and the grant value detecting E-AGCH, and controls data transmission of the user equipment 1 according to a detection result. Therefore, continuity of the data transmission can be ensured, and transmission efficiency is improved.

FIG. 5 is a schematic structural diagram of another user equipment according to an embodiment of the present invention. As shown in FIG. 5, the user equipment 2 includes: a memory 20 and a processor 21.

Specifically, the memory 20 is configured to store an instruction, and the processor 21 is configured to run the instruction stored in the memory 20, to perform the method for transmitting an absolute grant value according to the embodiment corresponding to FIG. 1.

In this embodiment, a user equipment 2 receives a conventional enhanced-absolute grant channel E-AGCH and a newly-added grant value detecting E-AGCH that are sent by a network side device; and detects absolute grant AG information carried on at least one channel of the conventional E-AGCH and the grant value detecting E-AGCH, and controls data transmission of the user equipment 2 according to a detection result. Therefore, continuity of the data transmission can be ensured, and transmission efficiency is improved.

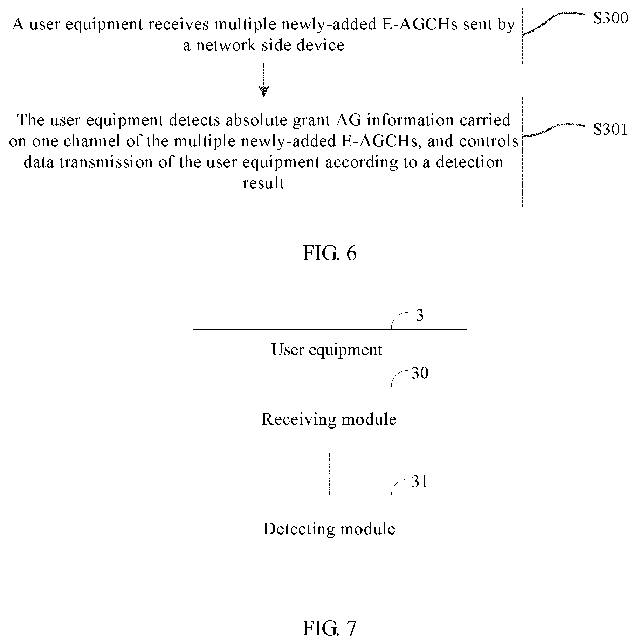

FIG. 6 is a flowchart of another method for transmitting an absolute grant value according to an embodiment of the present invention. In this embodiment, a user equipment receives multiple newly-added E-AGCH channels sent by a network side device, determines that at least one channel of the multiple newly-added E-AGCHs carries an AG of the user equipment, and performs a data transmission operation according to the AG. As shown in FIG. 6, the foregoing method for transmitting an absolute grant value includes:
Step S300: A user equipment receives multiple newly-added E-AGCHs sent by a network side device.
Step S301: The user equipment detects absolute grant AG information carried on one channel of the multiple newly-added E-AGCHs, and controls data transmission of the user equipment according to a detection result.

It should be noted that, the newly-added E-AGCH herein is the new E-AGCH in the background, and it may also become a newly-added grant value detecting E-AGCH. A difference between the newly-added E-AGCH and a conventional E-AGCH lies in that: for the conventional E-AGCH, when a UE detects an AG that belongs to the UE on the conventional E-AGCH, the UE controls data transmission of the UE according to the AG on the channel; while for the newly-added E-AGCH, a UE not only may detect the AG that belongs to the UE on the newly-added E-AGCH and control data transmission of the UE according to the detected AG, but also may detect an AG of another UE on the newly-added E-AGCH and stop, when detecting the AG of the another UE, data transmission that is performed currently. The foregoing multiple newly-added E-AGCHs are channels that are used by the network side device to send the AG information to the UE, and may occupy a same time-frequency resource or occupy different time-frequency resources, which is not limited herein.

Further, after receiving the foregoing multiple newly-added E-AGCHs, the UE may detect absolute grant AG information carried on one channel of the multiple newly-added E-AGCHs, and controls the data transmission of the UE according to the detection result.

Optionally, if the UE detects that one channel of the multiple newly-added E-AGCHs carries first AG information, where the first AG information represents AG information of the UE, the UE controls the data transmission according to the first AG information; and if the user equipment detects that none of the multiple newly-added E-AGCHs carries the first AG information of the user equipment and that one channel of the multiple newly-added E-AGCHs carries second AG information of another user equipment except the user equipment, the user equipment does not perform the data transmission. It should be noted that, that the UE does not perform data transmission refers to that, if the UE is currently performing the data transmission, the data transmission is stopped, and if the UE does not perform the data transmission, the data transmission is still not performed.

In this embodiment, a UE receives multiple newly-added E-AGCHs sent by a network side device; and detects absolute grant AG information carried on at least one channel of the multiple newly-added E-AGCHs, and controls data transmission of the UE according to a detection result. Therefore, continuity of the data transmission can be ensured, and transmission efficiency is improved.

FIG. 7 is a schematic structural diagram of still another user equipment according to an embodiment of the present invention. As shown in FIG. 7, the user equipment 3 includes: a receiving module 30 and a detecting module 31.

The receiving module 30 is configured to receive multiple newly-added E-AGCHs sent by a network side device.

The detecting module 31 is configured to detect absolute grant AG information carried on one channel of the multiple newly-added E-AGCHs, and control data transmission of the user equipment according to a detection result.

Further, the detecting module 31 is specifically configured to: when it is detected that one channel of the multiple newly-added E-AGCHs carries first AG information of the user equipment, control the data transmission of the user equipment according to the first AG information; or when it is detected that none of the multiple newly-added E-AGCHs carries the first AG information of the user equipment and that one channel of the multiple newly-added E-AGCHs carries second AG information of another user equipment except the user equipment, control the user equipment to skip performing the data transmission.

In this embodiment, a user equipment 3 receives multiple newly-added E-AGCHs sent by a network side device; and detects absolute grant AG information carried on at least one channel of the multiple newly-added E-AGCHs, and controls data transmission of the user equipment 3 according to a detection result. Therefore, continuity of the data transmission can be ensured, and transmission efficiency is improved.

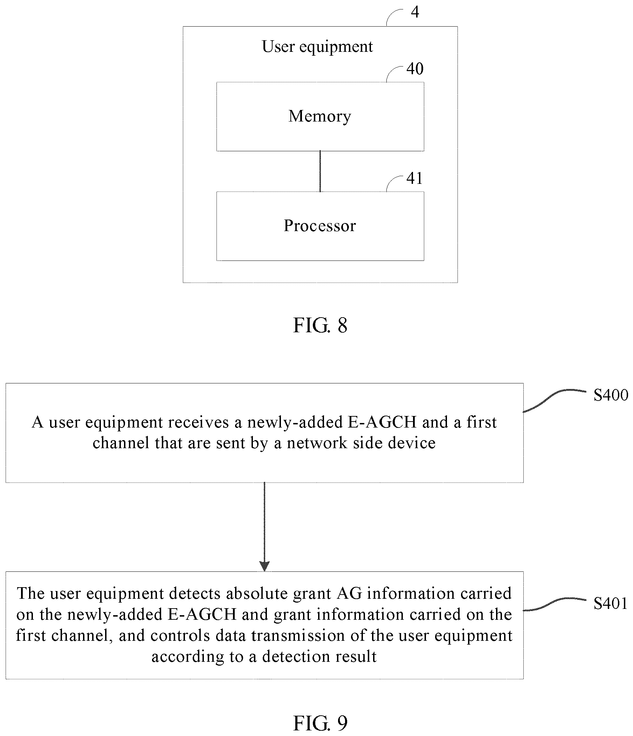

FIG. 8 is a schematic structural diagram of yet another user equipment according to an embodiment of the present invention. As shown in FIG. 8, the user equipment 4 includes: a memory 40 and a processor 41.

Specifically, the memory 40 is configured to store an instruction, and the processor 41 is configured to run the instruction stored in the memory 40, to perform the method for transmitting an absolute grant value according to the embodiment corresponding to FIG. 6, that is, steps S300, S301, and the like.

In this embodiment, a user equipment 4 receives multiple newly-added E-AGCHs sent by a network side device; and detects absolute grant AG information carried on one channel of the multiple newly-added E-AGCHs, and controls data transmission of the user equipment 4 according to a detection result. Therefore, continuity of the data transmission can be ensured, and transmission efficiency is improved.

FIG. 9 shows still another method for transmitting an absolute grant value according to an embodiment of the present invention, where the method includes:
Step S400: A user equipment receives a newly-added enhanced-absolute grant channel E-AGCH and a first channel that are sent by a network side device.
Step S401: The user equipment detects absolute grant AG information carried on the newly-added E-AGCH and grant information carried on the first channel, and controls data transmission of the user equipment according to a detection result.

Specifically, it should be noted that, the newly-added E-AGCH herein is the new E-AGCH in the background. When detecting an AG of another UE on the newly-added E-AGCH, the UE stops data transmission that is performed currently. In addition, in the prior art, when controlling the data transmission, the user equipment maintains a serving grant (Serving Grant, SG) value, and then controls the data transmission according to the serving grant value. The serving grant value is generally used to calculate a power upper limit value with which the user equipment may send scheduled data. When the network side device notifies the user equipment of an AG value, the user equipment updates the serving grant value maintained by the user equipment with the AG value, and then controls the data transmission. The detection result of step S401 may include the following several situations:
S401A: When the user equipment detects that the newly-added E-AGCH carries first AG information of the user equipment, the user equipment controls the data transmission according to the first AG information.
S401B: When the user equipment detects that the newly-added E-AGCH carries second AG information of another user equipment except the user equipment, the user equipment controls the data transmission according to a detection result of the grant information carried on the first channel.
S401C: When the user equipment detects that the newly-added E-AGCH does not carry any information, the user equipment controls the data transmission according to a detection result of the grant information carried on the first channel.

In a possible implementation manner, the situation of S401B may specifically include:
when the user equipment detects that the newly-added E-AGCH carries the second AG information of the another user equipment except the user equipment and detects that the first channel carries the grant information, the user equipment obtains an updated serving grant value according to the grant information and a current serving grant value, and controls the data transmission according to the updated serving grant value; and
when the user equipment detects that the newly-added E-AGCH carries the second AG information of the another user equipment except the user equipment and detects that the first channel does not carry the grant information, the user equipment stops the data transmission, where
the grant information instructs to increase or decrease the current serving grant value, to obtain the updated serving grant value. It should be noted that, an E-DCH relative grant channel (E-RGCH, E-DCH Relative Grant Channel) may be reused as the first channel herein. For example, the grant information carried by the E-RGCH channel may be instruction information, namely, "+1" or "-1", where +1 instructs to increase the serving grant value currently maintained by the user equipment, and -1 instructs to decrease the serving grant value currently maintained by the user equipment. Persons skilled in the art should know that, an amplitude of the increasing or decreasing may be specified in a protocol. It should be known that, the E-RGCH channel may be represented by using a channelisation code and a signature sequence, and different E-RGCH channels may be distinguished by using different channelisation codes, or may be distinguished by using different signature sequences, or may be distinguished by using different channelisation codes and different signature sequences at the same time. A conventional E-RGCH channel may be used to adjust a value of an SG. In this implementation manner, if the conventional E-RGCH channel is reused as the first channel, the conventional E-RGCH channel may instruct the user equipment to increase or decrease a current SG according to a relative grant value, to obtain a new SG value. In addition, a new E-RGCH channel may further be used as the first channel, that is, a network allocates two E-RGCH channels to each user equipment: one is the conventional E-RGCH, used to adjust the value of the SG, and the other is the new E-RGCH channel, specially used to: when the user equipment detects that the newly-added E-AGCH carries the second AG information of the another user equipment except the user equipment, instruct the user equipment not to stop the data transmission, and to control a value of a grant that is used when the data transmission is performed.

In another possible implementation manner, the situation of S401B may specifically include:
when the user equipment detects that the newly-added E-AGCH carries the second AG information of the another user equipment except the user equipment and detects that the first channel carries the grant information, the user equipment controls the data transmission according to the grant information, where the grant information instructs to continue performing the transmission according to a current serving grant value of the user equipment; and
when the user equipment detects that the newly-added E-AGCH carries the second AG information of the another user equipment except the user equipment and that the first channel does not carry the grant information, the user equipment stops the data transmission.

In this case, if the first channel is a conventional E-RGCH channel, when the user equipment detects that the newly-added E-AGCH carries the second AG information of the another user equipment except the user equipment, the E-RGCH is used to instruct to continue performing the transmission according to the current serving grant value of the user equipment; and when the user equipment detects that the newly-added E-AGCH does not carry any information, the E-RGCH channel maintains an original definition, and is used to adjust a value of an SG. If the first channel is a new E-RGCH, that is, a network allocates two E-RGCH channels to each user equipment: one is the conventional E-RGCH, used to adjust the value of the SG, and the other is the new E-RGCH channel, specially used to: when the user equipment detects that the newly-added E-AGCH carries the second AG information of the another user equipment except the user equipment, instruct the user equipment to continue performing the transmission according to the current serving grant value of the user equipment; and when the user equipment detects that the newly-added E-AGCH does not carry any information, the new E-RGCH channel is ineffective, and a user may not pay attention to information carried on the new E-RGCH channel even if the user receives the new E-RGCH channel.

Further, when a network side device delivers an E-AGCH that carries the second AG information of the another user equipment except the user equipment, information, namely "+1" or "-1", may be mapped on the E-RGCH in a fixed manner, and the user equipment is notified in advance, in a manner of protocol predefining or delivering by using network side high-layer signaling, or the like, of whether the information is mapped, so as to improve a probability that the user equipment detects grant information on the E-RGCH. The E-RGCH herein includes the conventional E-RGCH or the new E-RGCH.

In still another possible implementation manner, the situation of S401B may specifically include:
when the user equipment detects that the newly-added E-AGCH carries the second AG information of the another user equipment except the user equipment and detects that the first channel carries the grant information, the user equipment stops the data transmission, where the grant information instructs to stop the data transmission; and
when the user equipment detects that the newly-added E-AGCH carries the second AG information of the another user equipment except the user equipment and that the first channel does not carry the grant information, the user equipment continues performing the data transmission according to a current serving grant value.

In this case, if the first channel is a conventional E-RGCH channel, when the user equipment detects that the newly-added E-AGCH carries the second AG information of the another user equipment except the user equipment, the E-RGCH is used to instruct the user equipment to stop the data transmission; and when the user equipment detects that the newly-added E-AGCH does not carry any information, the E-RGCH channel maintains an original definition, and is used to adjust a value of an SG. If the first channel is a new E-RGCH, that is, a network allocates two E-RGCH channels to each user equipment: one is the conventional E-RGCH, used to adjust the value of the SG, and the other is the new E-RGCH channel, specially used to: when the user equipment detects that the newly-added E-AGCH carries the second AG information of the another user equipment except the user equipment, instruct the user equipment to stop the data transmission; and when the user equipment detects that the newly-added E-AGCH does not carry any information, the new E-RGCH channel is ineffective, and a user may not pay attention to information carried on the new E-RGCH channel even if the user receives the new E-RGCH channel.

Further, when a network side device delivers an E-AGCH that carries the second AG information of the another user equipment except the user equipment, information, namely "+1" or "-1", may be mapped on the E-RGCH in a fixed manner, and the user equipment is notified in advance, in a manner of protocol predefining or delivering by using network side high-layer signaling, or the like, of whether the information is mapped, so as to improve a probability that the user equipment detects grant information on the E-RGCH. The E-RGCH herein includes the conventional E-RGCH or the new E-RGCH.

In yet another possible implementation manner, the situation of S401B includes:
when the user equipment detects that the newly-added E-AGCH carries the second AG information of the another user equipment except the user equipment and detects that the first channel carries the grant information, and the grant information is a first grant instruction, the user equipment continues performing the transmission according to a current serving grant value; and
when the user equipment detects that the newly-added E-AGCH carries the second AG information of the another user equipment except the user equipment and detects that the first channel carries the grant information, and the grant information is a second grant instruction, the user equipment stops the data transmission, where
the first grant instruction instructs the user equipment to continue performing the data transmission according to the current serving grant value, and the second grant instruction instructs the user equipment to stop performing the data transmission.

In this case, if the first channel is a conventional E-RGCH channel, when the user equipment detects that the newly-added E-AGCH carries the second AG information of the another user equipment except the user equipment, the E-RGCH is used to instruct the user equipment to continue or stop the data transmission; and when the user equipment detects that the newly-added E-AGCH does not carry any information, the E-RGCH channel maintains an original definition, and is used to adjust a value of an SG. If the first channel is a new E-RGCH, that is, a network allocates two E-RGCH channels to each user equipment: one is the conventional E-RGCH, used to adjust the value of the SG, and the other is the new E-RGCH channel, specially used to: when the user equipment detects that the newly-added E-AGCH carries the second AG information of the another user equipment except the user equipment, instruct the user equipment to continue or stop the data transmission; and when the user equipment detects that the newly-added E-AGCH does not carry any information, the new E-RGCH channel is ineffective, and a user may not pay attention to information carried on the new E-RGCH channel even if the user receives the new E-RGCH channel.

Specifically, when the first channel is an E-RGCH channel, grant information sent by the E-RGCH channel may be divided into a first grant instruction and a second grant instruction, and the user equipment is notified of the first grant instruction and the second grant instruction in advance in a manner of protocol predefining or delivering by using network side high-layer signaling, so as to improve a probability that the user equipment detects grant information on the E-RGCH. Exemplarily, when the first grant instruction is "+1", the second grant instruction is "-1" correspondingly, or when the first grant instruction is "-1", the second grant instruction is "+1" correspondingly. The E-RGCH herein includes the conventional E-RGCH or the new E-RGCH.

By using the method in this embodiment, when multi-user transmission is supported, it is avoided that AGs are frequently delivered to re-start interrupted data transmission of a user equipment, and a downlink signaling overhead is reduced; and a data transmission interval of the user equipment caused because multiple AGs cannot be delivered simultaneously is avoided, and an uplink network capacity is improved.

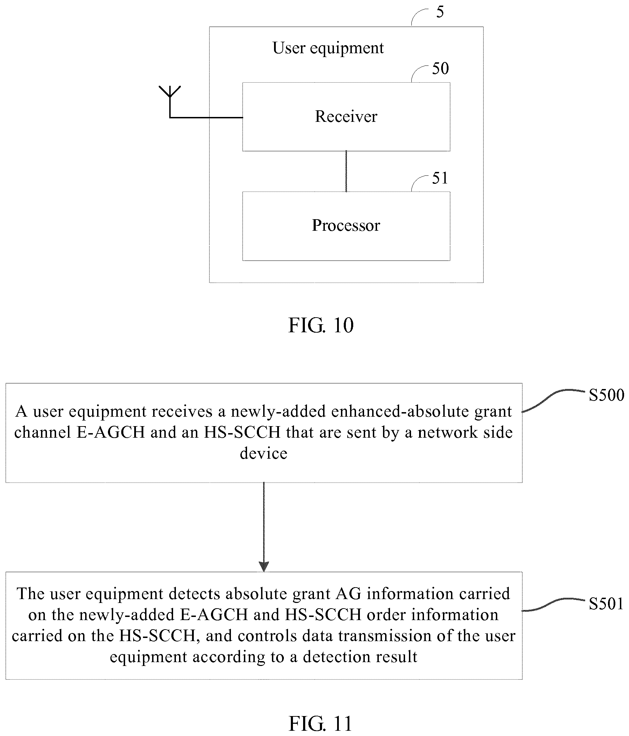

FIG. 10 shows still yet another user equipment 5 according to an embodiment of the present invention, where the user equipment 5 includes:
a receiver 50, configured to receive a newly-added enhanced-absolute grant channel E-AGCH and a first channel that are sent by a network side device; and
a processor 51, configured to detect absolute grant AG information carried on the newly-added E-AGCH and grant information carried on the first channel, and control data transmission of the user equipment according to a detection result.

In this embodiment, the processor 51 is specifically configured to:
when it is detected that the newly-added E-AGCH carries first AG information of the user equipment, control the data transmission according to the first AG information;
when it is detected that the newly-added E-AGCH carries second AG information of another user equipment except the user equipment, control the data transmission according to a detection result of the grant information carried on the first channel; and
when it is detected that the newly-added E-AGCH does not carry any information, control the data transmission according to the detection result of the grant information carried on the first channel.

In an implementation manner, when the processor 51 detects that the newly-added E-AGCH carries the second AG information of the another user equipment except the user equipment, the processor 51 may be specifically configured to:
when it is detected that the first channel carries the grant information, obtain an updated serving grant value according to the grant information and a current serving grant value, and control the data transmission according to the updated serving grant value; or
when it is detected that the first channel does not carry the grant information, stop the data transmission, where
the grant information instructs to increase or decrease the current serving grant value. For example, when an E-RGCH is reused as the first channel, the grant information carried by the E-RGCH channel may be two pieces of instruction information, namely, "+1" or "-1", where +1 instructs to increase the serving grant value currently maintained by the user equipment, and -1 instructs to decrease the serving grant value currently maintained by the user equipment.

In another implementation manner, when the processor 51 detects that the newly-added E-AGCH carries the second AG information of the another user equipment except the user equipment, the processor 51 may be specifically configured to:
when it is detected that the first channel carries the grant information, control the data transmission according to the grant information; or
when it is detected that the first channel does not carry the grant information, stop the data transmission, where
the grant information instructs to continue performing the transmission according to a current serving grant value of the user equipment.

In still another implementation manner, when the processor 51 detects that the newly-added E-AGCH carries the second AG information of the another user equipment except the user equipment, the processor 51 may be specifically configured to:
when it is detected that the first channel carries the grant information, stop the data transmission, where the grant information instructs to stop the data transmission;
when it is detected that the first channel does not carry the grant information, continue performing the data transmission according to a current serving grant value;
when it is detected that the first channel carries the grant information, and the grant information is a first grant instruction, perform the data transmission according to the current serving grant value; and
when it is detected that the first channel carries the grant information, and the grant information is a second grant instruction, stop the data transmission, where
the first grant instruction is used to instruct to continue performing the data transmission according to the current serving grant value, and the second grant instruction is used to instruct to stop performing the data transmission.

According to the user equipment provided by this embodiment, when multi-user transmission is supported, it is avoided that AGs are frequently delivered to re-start interrupted data transmission of the user equipment, and a downlink signaling overhead is reduced; and a data transmission interval of the user equipment caused because multiple AGs cannot be delivered simultaneously is avoided, and an uplink network capacity is improved.

FIG. 11 shows yet another method for transmitting an absolute grant value according to an embodiment of the present invention, where the method includes:
Step S500: A user equipment receives a newly-added enhanced-absolute grant channel E-AGCH and a downlink high speed-shared control channel (High Speed-Shared Control Channel, HS-SCCH) that are sent by a network side device.
Step S501: The user equipment detects absolute grant AG information carried on the newly-added E-AGCH and HS-SCCH order (Order) information carried on the HS-SCCH, and controls data transmission of the user equipment according to a detection result.

In an implementation manner, Step S501 may specifically include:
when the user equipment detects that the newly-added E-AGCH carries second AG information of another user equipment except the user equipment, and when the user equipment detects that the HS-SCCH order information carried on the HS-SCCH instructs the user equipment to continue the transmission, continuing performing, by the user equipment, the data transmission according to a current serving grant value; and
when the user equipment detects that the newly-added E-AGCH carries the second AG information of the another user equipment except the user equipment, and when the user equipment detects that the HS-SCCH does not carry the HS-SCCH order information, stopping, by the user equipment, the data transmission.

In another implementation manner, step S501 may specifically include:
when the user equipment detects that the newly-added E-AGCH carries second AG information of another user equipment except the user equipment, and when the user equipment detects that HS-SCCH order information carried on the HS-SCCH instructs the user equipment to stop the data transmission, stopping, by the user equipment, the data transmission; and
when the user equipment detects that the newly-added E-AGCH carries the second AG information of the another user equipment except the user equipment, and when the user equipment detects that the HS-SCCH does not carry the HS-SCCH order information, continuing performing, by the user equipment, the data transmission according to a current serving grant value. It can be seen that, a difference between this implementation manner and the previous implementation manner lies in whether the HS-SCCH order information instructs to continue transmission or stop transmission.

It should be noted that, the user equipment in this embodiment may specifically include a receiver and a processor, which respectively perform functions of steps S500 and S501. Reference may be made to division of the user equipment in FIG. 10, and details are not described herein again.

By using the method in this embodiment, when multi-user transmission is supported, it is avoided that AGs are frequently delivered to re-start interrupted data transmission of a user equipment, and a downlink signaling overhead is reduced; and a data transmission interval of the user equipment caused because multiple AGs cannot be delivered simultaneously is avoided, and an uplink network capacity is improved.

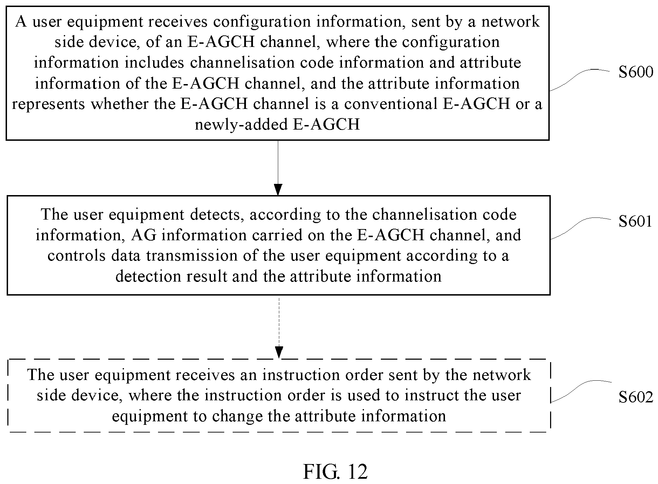

FIG. 12 shows still yet another method for transmitting an absolute grant value according to an embodiment of the present invention, where the method includes:
Step S600: A user equipment receives configuration information, sent by a network side device, of an E-AGCH channel, where the configuration information includes channelisation code information and attribute information of the E-AGCH channel, and the attribute information represents whether the E-AGCH channel is a conventional E-AGCH or a newly-added E-AGCH.
Step S601: The user equipment detects, according to the channelisation code information, absolute grant (AG) information carried on the E-AGCH channel, and controls data transmission of the user equipment according to a detection result and the attribute information.

In step S601, the controlling data transmission of the user equipment according to a detection result and the attribute information may specifically include:
when the attribute information indicates that the E-AGCH channel is a conventional E-AGCH channel, and the user equipment detects the AG information on the E-AGCH channel, updating a current serving grant value by using the AG information, and performing the data transmission according to an updated serving grant value;
when the attribute information indicates that the E-AGCH channel is a conventional E-AGCH channel, and the user equipment does not detect the AG information on the E-AGCH channel, continuing performing the data transmission according to the current serving grant value, and if no data transmission is performed currently, keeping a state of no data transmission unchanged;
when the attribute information indicates that the E-AGCH channel is a newly-added E-AGCH channel, and the user equipment detects the AG information of the user equipment on the E-AGCH channel, updating the current serving grant value by using the AG information, and performing the data transmission according to an updated serving grant value;
when the attribute information indicates that the E-AGCH channel is a newly-added E-AGCH channel, and the user equipment detects AG information of another user equipment except the user equipment on the E-AGCH channel, stopping the data transmission, and if no data transmission is performed currently, keeping a state of no data transmission unchanged; and
when the attribute information indicates that the E-AGCH channel is a newly-added E-AGCH channel, and the user equipment does not detect the AG information on the E-AGCH channel, continuing performing the data transmission according to the current serving grant value, and if no data transmission is performed currently, keeping a state of no data transmission unchanged.

Further, the method may further include: Step S602: The user equipment receives an instruction order sent by the network side device, and changes the attribute information of the E-AGCH channel according to the instruction order, where the instruction order is used to instruct the user equipment to change the attribute information.

In specific implementation, the attribute information may be changed in two manners.
1. The instruction order explicitly indicates whether attribute information of a changed E-AGCH channel is a conventional E-AGCH channel or a newly-added E-AGCH channel, after receiving the instruction order, the user equipment changes the original attribute information of the E-AGCH channel according to the instruction order.
2. The instruction order indicates that the original attribute information of the E-AGCH channel needs to be changed, that is, if the unchanged E-AGCH channel is a conventional E-AGCH channel, the conventional E-AGCH channel is changed to a newly-added E-AGCH channel, and/or, if the unchanged E-AGCH channel is a newly-added E-AGCH channel, the newly-added E-AGCH channel is changed to the conventional E-AGCH channel.

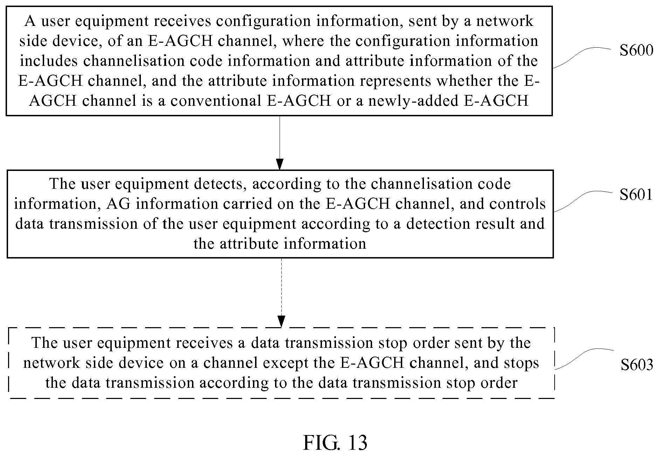

In another implementation manner of this embodiment, as shown in FIG. 13, the method may further include: Step S603: The user equipment receives a data transmission stop order sent by the network side device through a channel except the E-AGCH channel, and stops the data transmission according to an instruction of the data transmission stop order.

In specific implementation, the channel except the E-AGCH channel may be an E-RGCH or an HS-SCCH.

When the channel is the E-RGCH, which may include a conventional E-RGCH or a new E-RGCH, information carried on the E-RGCH may be "+1" or "-1". The user equipment stops the data transmission as long as the user equipment receives a corresponding E-RGCH for transferring the data transmission stop order. In addition, a network side device may also map information, namely, "+1" or "-1", on the E-RGCH in a fixed manner, and the user equipment is notified in advance, in a manner of protocol predefining or delivering by using network side high-layer signaling, or the like, of whether the information is mapped, so as to improve a probability that the user equipment detects the data transmission stop order on the E-RGCH.

When the channel is the HS-SCCH, the data transmission stop order may be delivered in a manner of HS-SCCH order.

It should be noted that, in the foregoing implementation manner, step S602 and step S603 are not necessary, and step S602 and step S603 may be separately combined with step S600 and step S601, or, all of step S600, step S601, step S602, and step S603 may be included in an implementation manner, which is not limited in this embodiment.

It should be noted that, the user equipment in this embodiment may specifically include a receiver, which performs corresponding functions of steps S600, S602 and/or S603, and a processor, which performs a function of S601. Reference may be made to division of the user equipment in FIG. 10, and details are not described herein again. Persons skilled in the art should know that, that the receiver performs functions or a function of S602 and/or S603 herein mainly refers to acquiring a corresponding order from a channel, and a further function performed according to an instruction of the order is still performed by the processor.

By using the method in this embodiment, when multi-user transmission is supported, it is avoided that AGs are frequently delivered to re-start interrupted data transmission of a user equipment, and a downlink signaling overhead is reduced; and a data transmission interval of the user equipment caused because multiple AGs cannot be delivered simultaneously is avoided, and an uplink network capacity is improved.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A method for transmitting an absolute grant value, comprising:
receiving, by a user equipment, a conventional enhanced-absolute grant channel, E-AGCH, and a newly-added grant value detecting E-AGCH that are sent by a network side device; and
detecting, by the user equipment, absolute grant, AG, information carried on at least one channel of the conventional E-AGCH and the grant value detecting E-AGCH, and controlling data transmission of the user equipment according to a detection result;
wherein the detecting, by the user equipment, absolute grant AG information carried on at least one channel of the conventional E-AGCH and the grant value detecting E-AGCH, and controlling data transmission of the user equipment according to a detection result comprises:
if the user equipment detects that the at least one channel of the conventional E-AGCH and the grant value detecting E-AGCH carries first AG information of the user equipment,
controlling, by the user equipment, the data transmission according to the first AG information of the user equipment.

2. The method according to claim 1, wherein the controlling, by the user equipment, the data transmission according to the first AG information of the user equipment if the user equipment detects that the at least one channel of the conventional E-AGCH and the grant value detecting E-AGCH carries first AG information of the user equipment, comprises:
if the user equipment detects that the conventional E-AGCH carries the first AG information of the user equipment, controlling, by the user equipment, the data transmission according to the first AG information of the user equipment; and
if the user equipment detects that the conventional E-AGCH does not carry the first AG information of the user equipment, and detects that the grant value detecting E-AGCH carries the first AG information of the user equipment, controlling, by the user equipment, the data transmission according to the first AG information.

3. The method according to claim 1, wherein the detecting, by the user equipment, absolute grant, AG, information carried on at least one channel of the conventional E-AGCH and the grant value detecting E-AGCH, and controlling current data transmission of the user equipment according to a detection result comprises:
if the user equipment detects that the conventional E-AGCH does not carry first AG information of the user equipment and that the grant value detecting E-AGCH carries second AG information of another user equipment except the user equipment,
skipping performing, by the user equipment, the data transmission.

4. A user equipment, comprising:
a receiving module, configured to receive a conventional enhanced-absolute grant channel, E-AGCH, and a newly-added grant value detecting E-AGCH that are sent by a network side device; and
a detecting module, configured to detect absolute grant, AG, information carried on at least one channel of the conventional E-AGCH and the grant value detecting E-AGCH, and control data transmission of the user equipment according to a detection result;
wherein the detecting module is specifically configured to:
if it is detected that the at least one channel of the conventional E-AGCH and the grant value detecting E-AGCH carries first AG information of the user equipment,
control the data transmission according to the first AG information of the user equipment.

5. The user equipment according to claim 4, wherein the detecting module is specifically configured to:
if it is detected that the conventional E-AGCH carries the first AG information of the user equipment, control the data transmission according to the first AG information of the user equipment; and
if it is detected that the conventional E-AGCH does not carry the first AG information of the user equipment, and it is detected that the grant value detecting E-AGCH carries the first AG information of the user equipment, control the data transmission according to the first AG information.

6. The user equipment according to claim 4, wherein the detecting module is specifically configured to:
if it is detected that the conventional E-AGCH does not carry first AG information of the user equipment and that the grant value detecting E-AGCH carries second AG information of another user equipment except the user equipment,
skip performing the data transmission.

7. A method for transmitting an absolute grant value, comprising:
receiving, by a user equipment, a newly-added enhanced-absolute grant channel E-AGCH and a first channel that are sent by a network side device, the first channel being an enhanced-relative grant channel E-RGCH; and
detecting, by the user equipment, absolute grant, AG, information carried on the newly-added E-AGCH and grant information carried on the first channel, and controlling data transmission of the user equipment according to a detection result;
wherein when the user equipment detects that the newly-added E-AGCH carries first AG information of the user equipment, the user equipment controls the data transmission according to the first AG information.

8. The method according to claim 7, wherein the detecting, by the user equipment, AG information carried on the newly-added E-AGCH and grant information carried on the first channel, and controlling current data transmission of the user equipment according to a detection result comprises:
controlling, by the user equipment, the data transmission according to a detection result of the grant information carried on the first channel when the user equipment detects that the newly-added E-AGCH carries second AG information of another user equipment except the user equipment.

9. The method according to claim 8, wherein the controlling, by the user equipment, the data transmission according to a detection result of the grant information carried on the first channel when the user equipment detects that the newly-added E-AGCH carries second AG information of another user equipment except the user equipment comprises:
when the user equipment detects that the first channel carries the grant information, obtaining, by the user equipment, an updated serving grant value according to the grant information and a current serving grant value, and controlling the data transmission according to the updated serving grant value; and
when the user equipment detects that the first channel does not carry the grant information, stopping, by the user equipment, the data transmission, wherein
the grant information instructs to increase or decrease the current serving grant value.

10. The method according to claim 8, wherein the controlling, by the user equipment, the data transmission according to a detection result of the grant information carried on the first channel when the user equipment detects that the newly-added E-AGCH carries second AG information of another user equipment except the user equipment comprises:
when the user equipment detects that the first channel carries the grant information, controlling, by the user equipment, the data transmission according to the grant information, wherein the grant information instructs to continue performing the data transmission according to a current serving grant value of the user equipment; or
when the user equipment detects that the first channel does not carry the grant information, stopping, by the user equipment, the data transmission.

11. The method according to claim 8, wherein the controlling, by the user equipment, the data transmission according to a detection result of the grant information carried on the first channel when the user equipment detects that the newly-added E-AGCH carries second AG information of another user equipment except the user equipment comprises:
when the user equipment detects that the first channel carries the grant information, stopping, by the user equipment, the data transmission, wherein the grant information instructs to stop the data transmission; or
when the user equipment detects that the first channel does not carry the grant information, continuing performing, by the user equipment, the data transmission according to a current serving grant value.

12. The method according to claim 8, wherein the controlling, by the user equipment, the data transmission according to a detection result of the grant information carried on the first channel when the user equipment detects that the newly-added E-AGCH carries second AG information of another user equipment except the user equipment comprises:
when the user equipment detects that the first channel carries the grant information, and the grant information is a first grant instruction, continuing performing, by the user equipment, the data transmission according to a current serving grant value; and
when the user equipment detects that the first channel carries the grant information, and the grant information is a second grant instruction, stopping, by the user equipment, the data transmission, wherein
the first grant instruction instructs the user equipment to continue performing the data transmission according to the current serving grant value, and the second grant instruction instructs the user equipment to stop performing the data transmission.

13. A user equipment, comprising:
a receiver, configured to receive a newly-added enhanced-absolute grant channel, E-AGCH, and a first channel that are sent by a network side device; and
a processor, configured to detect absolute grant, AG, information carried on the newly-added E-AGCH and grant information carried on the first channel, and control data transmission of the user equipment according to a detection result;
wherein the processor is specifically configured to:
when it is detected that the newly-added E-AGCH carries first AG information of the user equipment, control the data transmission according to the first AG information.

14. The user equipment according to claim 13, wherein the processor is specifically configured to:
when it is detected that the newly-added E-AGCH carries second AG information of another user equipment except the user equipment, control the data transmission according to a detection result of the grant information carried on the first channel.

15. The user equipment according to claim 14, wherein when the processor detects that the newly-added E-AGCH carries the second AG information of the another user equipment except the user equipment, the processor is specifically configured to:
when it is detected that the first channel carries the grant information, obtain an updated serving grant according to the grant information and a current serving grant value, and control the data transmission according to the updated serving grant value; or
when it is detected that the first channel does not carry the grant information, stop the data transmission, wherein
the grant information instructs to increase or decrease the current serving grant value.

16. The user equipment according to claim 14, wherein when the processor detects that the newly-added E-AGCH carries the second AG information of the another user equipment except the user equipment, the processor is specifically configured to:
when it is detected that the first channel carries the grant information, control the data transmission according to the grant information; or
when it is detected that the first channel does not carry the grant information, stop the data transmission, wherein
the grant information instructs to continue performing the transmission according to a current serving grant value of the user equipment.

17. The user equipment according to claim 14, wherein when the processor detects that the newly-added E-AGCH carries the second AG information of the another user equipment except the user equipment, the processor is specifically configured to:
when it is detected that the first channel carries the grant information, stop the data transmission, wherein the grant information instructs to stop the data transmission; and
when it is detected that the first channel does not carry the grant information, continue performing the data transmission according to a current serving grant value.

18. The user equipment according to claim 14, wherein when the processor detects that the newly-added E-AGCH carries the second AG information of the another user equipment except the user equipment, the processor is specifically configured to:
when it is detected that the first channel carries the grant information, and the grant information is a first grant instruction, continue performing the data transmission according to a current serving grant value; and
when it is detected that the first channel carries the grant information, and the grant information is a second grant instruction, stop the data transmission, wherein
the first grant instruction is used to instruct to continue performing the data transmission according to the current serving grant value, and the second grant instruction is used to instruct to stop performing the data transmission.

## Patentansprüche

1. Verfahren zur Übertragung eines Absolute-Grant-Werts, umfassend:
Empfangen eines konventionellen "Enhanced Absolute Grant Channel", E-AGCH, und eines neu hinzugefügten, den Grant-Wert detektierenden E-AGCH, die durch eine netzwerkseitige Einrichtung gesendet werden, durch ein Benutzer-Equipment; und
Detektieren von Absolute-Grant-, AG-, -Information, getragen auf mindestens einem Kanal des konventionellen E-AGCH, und des den Grant-Wert detektierenden E-AGCH, und Steuern der Datenübertragung des Benutzer-Equipments entsprechend einem Detektionsergebnis;
wobei das Detektieren der auf mindestens einem Kanal des konventionellen E-AGCH getragenen Absolute-Grant-AG-Information und des den Grant-Wert detektierenden E-AGCH und das Steuern der Datenübertragung des Benutzer-Equipments entsprechend einem Detektionsergebnis umfassen:
falls das Benutzer-Equipment detektiert, dass der mindestens eine Kanal des konventionellen E-AGCH und des den Grant-Wert detektierenden E-AGCH erste AG-Information des Benutzer-Equipments trägt,
Steuern der Datenübertragung entsprechend der ersten AG-Information des Benutzer-Equipments durch das Benutzer-Equipment.

2. Verfahren nach Anspruch 1, wobei, falls das Benutzer-Equipment detektiert, dass der mindestens eine Kanal des konventionellen E-AGCH und des den Grant-Wert detektierenden E-AGCH erste AG-Information des Benutzer-Equipments trägt, das Steuern der Datenübertragung entsprechend der ersten AG-Information des Benutzer-Equipments durch das Benutzer-Equipment umfasst:
Falls das Benutzer-Equipment detektiert, dass der konventionelle E-AGCH die erste AG-Information des Benutzer-Equipments trägt, Steuern der Datenübertragung entsprechend der ersten AG-Information des Benutzer-Equipments durch das Benutzer-Equipment; und
falls das Benutzer-Equipment detektiert, dass der mindestens eine Kanal des konventionellen E-AGCH die erste AG-Information des Benutzer-Equipments nicht trägt und dass der den Grant-Wert detektierende E-AGCH die erste AG-Information des Benutzer-Equipments trägt, Steuern der Datenübertragung entsprechend der ersten AG-Information durch das Benutzer-Equipment.

3. Verfahren nach Anspruch 1, wobei das Detektieren der auf mindestens einem Kanal des konventionellen E-AGCH getragenen Absolute-Grant-, AG-, -Information und des den Grant-Wert detektierenden E-AGCH und das Steuern der Datenübertragung des Benutzer-Equipments entsprechend einem Detektionsergebnis umfassen:
Falls das Benutzer-Equipment detektiert, dass der konventionelle E-AGCH nicht erste AG-Information des Benutzer-Equipments trägt und dass der den Grant-Wert detektierende E-AGCH zweite AG-Information eines anderen Benutzer-Equipments unter Ausnahme des Benutzer-Equipments trägt,
Überspringen der Durchführung der Datenübertragung durch das Benutzer-Equipment.

4. Benutzer-Equipment, umfassend:
ein Empfangsmodul, ausgelegt zum Empfangen eines konventionellen "Enhanced Absolute Grant Channel", E-AGCH, und eines neu hinzugefügten, den Grant-Wert detektierenden E-AGCH, die durch eine netzwerkseitige Einrichtung gesendet werden; und
ein Detektiermodul, ausgelegt zum Detektieren von Absolute-Grant-, AG-, - Information, getragen auf mindestens einem Kanal des konventionellen E-AGCH, und des den Grant-Wert detektierenden E-AGCH, und Steuern der Datenübertragung des Benutzer-Equipments entsprechend einem Detektionsergebnis;
wobei das Detektiermodul im Einzelnen dafür ausgelegt ist,
falls detektiert wird, dass der mindestens eine Kanal des konventionellen E-AGCH und des den Grant-Wert detektierenden E-AGCH erste AG-Information des Benutzer-Equipments trägt,
die Datenübertragung entsprechend der ersten AG-Information des Benutzer-Equipments zu steuern.

5. Benutzer-Equipment nach Anspruch 4, wobei das Detektiermodul im Einzelnen dafür ausgelegt ist,
falls detektiert wird, dass der konventionelle E-AGCH die erste AG-Information des Benutzer-Equipments trägt, die Datenübertragung entsprechend der ersten AG-Information des Benutzer-Equipments zu steuern; und
falls detektiert wird, dass der mindestens eine Kanal des konventionellen E-AGCH nicht die erste AG-Information des Benutzer-Equipments trägt, und falls detektiert wird, dass der den Grant-Wert detektierende E-AGCH die erste AG-Information des Benutzer-Equipments trägt, die Datenübertragung entsprechend der ersten AG-Information zu steuern.

6. Benutzer-Equipment nach Anspruch 4, wobei das Detektiermodul im Einzelnen dafür ausgelegt ist,
falls das Benutzer-Equipment detektiert, dass der konventionelle E-AGCH nicht erste AG-Information des Benutzer-Equipments trägt und dass der den Grant-Wert detektierende E-AGCH zweite AG-Information eines anderen Benutzer-Equipments unter Ausnahme des Benutzer-Equipments trägt,
die Durchführung der Datenübertragung zu überspringen.

7. Verfahren zum Übertragen eines Absolute-Grant-Werts, umfassend:
Empfangen, durch ein Benutzer-Equipment, eines neu hinzugefügten "Enhanced Absolute Grant Channel", E-AGCH, und eines ersten Kanals, die durch eine netzwerkseitige Einrichtung gesendet werden, wobei der erste Kanal ein "Enhanced Relative Grant Channel", E-RGCH, ist; und
Detektieren, durch das Benutzer-Equipment, von Absolute-Grant-, AG-, - Information, getragen auf dem neu hinzugefügten E-AGCH, und von auf dem ersten Kanal getragener Grant-Information und Steuern der Datenübertragung des Benutzer-Equipments entsprechend einem Detektionsergebnis;
wobei, wenn das Benutzer-Equipment detektiert, dass der neu hinzugefügte E-AGCH erste AG-Information des Benutzer-Equipments trägt, das Benutzer-Equipment die Datenübertragung entsprechend der ersten AG-Information steuert.

8. Verfahren nach Anspruch 7, wobei das Detektieren, durch das Benutzer-Equipment, von auf dem neu hinzugefügten E-AGCH getragener AG-Information und von auf dem ersten Kanal getragener Grant-Information und das Steuern der Datenübertragung des Benutzer-Equipments entsprechend einem Detektionsergebnis umfassen:
Steuern, durch das Benutzer-Equipment, der Datenübertragung entsprechend einem Detektionsergebnis der auf dem ersten Kanal getragenen Grant-Information, wenn das Benutzer-Equipment detektiert, dass der neu hinzugefügte E-AGCH zweite AG-Information eines anderen Benutzer-Equipments unter Ausnahme des Benutzer-Equipments trägt.

9. Verfahren nach Anspruch 8, wobei das Steuern, durch das Benutzer-Equipment, der Datenübertragung entsprechend einem Detektionsergebnis der auf dem ersten Kanal getragenen Grant-Information, wenn das Benutzer-Equipment detektiert, dass der neu hinzugefügte E-AGCH zweite AG-Information eines anderen Benutzer-Equipments unter Ausnahme des Benutzer-Equipments trägt, umfasst:
wenn das Benutzer-Equipment detektiert, dass der erste Kanal die Grant-Information trägt, Erhalten eines aktualisierten aktiven Grant-Werts durch das Benutzer-Equipment entsprechend der Grant-Information und einem derzeitigen aktiven Grant-Wert und Steuern der Datenübertragung entsprechend dem aktualisierten aktiven Grant-Wert; und
wenn das Benutzer-Equipment detektiert, dass der erste Kanal die Grant-Information nicht trägt, Anhalten der Datenübertragung durch das Benutzer-Equipment, wobei die Grant-Information anweist, den derzeitigen aktiven Grant-Wert heraufzusetzen oder herabzusetzen.

10. Verfahren nach Anspruch 8, wobei das Steuern der Datenübertragung durch das Benutzer-Equipment entsprechend einem Detektionsergebnis der auf dem ersten Kanal getragenen Grant-Information, wenn das Benutzer-Equipment detektiert, dass der neu hinzugefügte E-AGCH zweite AG-Information eines anderen Benutzer-Equipments unter Ausnahme des Benutzer-Equipments trägt, umfasst:
Wenn das Benutzer-Equipment detektiert, dass der erste Kanal die Grant-Information trägt, Steuern der Datenübertragung durch das Benutzer-Equipment entsprechend der Grant-Information, wobei die Grant-Information anweist, das Durchführen der Datenübertragung entsprechend einem derzeitigen aktiven Grant-Wert des Benutzer-Equipments fortzusetzen; oder
wenn das Benutzer-Equipment detektiert, dass der erste Kanal die Grant-Information nicht trägt, Anhalten der Datenübertragung durch das Benutzer-Equipment.

11. Verfahren nach Anspruch 8, wobei das Steuern der Datenübertragung durch das Benutzer-Equipment entsprechend einem Detektionsergebnis der auf dem ersten Kanal getragenen Grant-Information, wenn das Benutzer-Equipment detektiert, dass der neu hinzugefügte E-AGCH zweite AG-Information eines anderen Benutzer-Equipments unter Ausnahme des Benutzer-Equipments trägt, umfasst:
Wenn das Benutzer-Equipment detektiert, dass der erste Kanal die Grant-Information trägt, Anhalten der Datenübertragung durch das Benutzer-Equipment, wobei die Grant-Information anweist, die Datenübertragung anzuhalten; oder,
wenn das Benutzer-Equipment detektiert, dass der erste Kanal die Grant-Information nicht trägt, Fortsetzen der Durchführung der Datenübertragung durch das Benutzer-Equipment entsprechend einem derzeitigen aktiven Grant-Wert.

12. Verfahren nach Anspruch 8, wobei das Steuern der Datenübertragung durch das Benutzer-Equipment entsprechend einem Detektionsergebnis der auf dem ersten Kanal getragenen Grant-Information, wenn das Benutzer-Equipment detektiert, dass der neu hinzugefügte E-AGCH zweite AG-Information eines anderen Benutzer-Equipments unter Ausnahme des Benutzer-Equipments trägt, umfasst:
Wenn das Benutzer-Equipment detektiert, dass der erste Kanal die Grant-Information trägt, und die Grant-Information eine erste Grant-Anweisung ist, Fortsetzen der Durchführung der Datenübertragung durch das Benutzer-Equipment entsprechend einem derzeitigen aktiven Grant-Wert; und
wenn das Benutzer-Equipment detektiert, dass der erste Kanal die Grant-Information trägt, und die Grant-Information eine zweite Grant-Anweisung ist, Anhalten der Datenübertragung durch das Benutzer-Equipment, wobei
die erste Grant-Anweisung das Benutzer-Equipment anweist, die Durchführung der Datenübertragung entsprechend dem derzeitigen aktiven Grant-Wert fortzusetzen, und die zweite Grant-Anweisung das Benutzer-Equipment anweist, die Durchführung der Datenübertragung anzuhalten.

13. Benutzer-Equipment, umfassend:
einen Empfänger, ausgelegt zum Empfangen eines neu hinzugefügten "Enhanced Absolute Grant Channel", E-AGCH, und eines ersten Kanals, die durch eine netzwerkseitige Einrichtung gesendet werden; und
einen Prozessor, ausgelegt zum Detektieren von Absolute-Grant-, AG-, -Information, getragen auf dem neu hinzugefügten E-AGCH, und von auf dem ersten Kanal getragener Grant-Information und zum Steuern der Datenübertragung des Benutzer-Equipments entsprechend einem Detektionsergebnis;
wobei der Prozessor im Einzelnen dafür ausgelegt ist,
wenn detektiert wird, dass der neu hinzugefügte E-AGCH erste AG-Information des Benutzer-Equipments trägt, die Datenübertragung entsprechend der ersten AG-Information zu steuern.

14. Benutzer-Equipment nach Anspruch 13, wobei der Prozessor im Einzelnen dafür ausgelegt ist,
wenn detektiert wird, dass der neu hinzugefügte E-AGCH zweite AG-Information eines anderen Benutzer-Equipments mit Ausnahme des Benutzer-Equipments trägt, die Datenübertragung entsprechend einem Detektionsergebnis der auf dem ersten Kanal getragenen Grant-Information zu steuern.

15. Benutzer-Equipment nach Anspruch 14, wobei, wenn der Prozessor detektiert, dass der neu hinzugefügte E-AGCH die zweite AG-Information des anderen Benutzer-Equipments mit Ausnahme des Benutzer-Equipments trägt, der Prozessor im Einzelnen dafür ausgelegt ist,
wenn detektiert wird, dass der erste Kanal die Grant-Information trägt, einen aktualisierten aktiven Grant entsprechend der Grant-Information und einen derzeitigen aktiven Grant-Wert zu erhalten und die Datenübertragung entsprechend dem aktualisierten aktiven Grant-Wert zu steuern; oder
wenn detektiert wird, dass der erste Kanal die Grant-Information nicht trägt, die Datenübertragung anzuhalten, wobei
die Grant-Information anweist, den derzeitigen aktiven Grant-Wert heraufzusetzen oder herabzusetzen.

16. Benutzer-Equipment nach Anspruch 14, wobei, wenn der Prozessor detektiert, dass der neu hinzugefügte E-AGCH die zweite AG-Information des anderen Benutzer-Equipments mit Ausnahme des Benutzer-Equipments trägt, der Prozessor im Einzelnen dafür ausgelegt ist,
wenn detektiert wird, dass der erste Kanal die Grant-Information trägt, die Datenübertragung entsprechend der Grant-Information zu steuern; oder
wenn detektiert wird, dass der erste Kanal die Grant-Information nicht trägt, die Datenübertragung anzuhalten, wobei
die Grant-Information anweist, die Durchführung der Übertragung entsprechend einem derzeitigen aktiven Grant-Wert des Benutzer-Equipments fortzusetzen.

17. Benutzer-Equipment nach Anspruch 14, wobei, wenn der Prozessor detektiert, dass der neu hinzugefügte E-AGCH die zweite AG-Information des anderen Benutzer-Equipments mit Ausnahme des Benutzer-Equipments trägt, der Prozessor im Einzelnen dafür ausgelegt ist,
wenn detektiert wird, dass der erste Kanal die Grant-Information trägt, die Datenübertragung anzuhalten, wobei die Grant-Information anweist, die Datenübertragung anzuhalten; und
wenn detektiert wird, dass der erste Kanal die Grant-Information nicht trägt, die Durchführung der Datenübertragung entsprechend einem derzeitigen aktiven Grant-Wert fortzusetzen.

18. Benutzer-Equipment nach Anspruch 14, wobei, wenn der Prozessor detektiert, dass der neu hinzugefügte E-AGCH die zweite AG-Information des anderen Benutzer-Equipments mit Ausnahme des Benutzer-Equipments trägt, der Prozessor im Einzelnen dafür ausgelegt ist,
wenn detektiert wird, dass der erste Kanal die Grant-Information trägt und die Grant-Information eine erste Grant-Anweisung ist, die Durchführung der Datenübertragung entsprechend einem derzeitigen aktiven Grant-Wert fortzusetzen; und
wenn detektiert wird, dass der erste Kanal die Grant-Information trägt und die Grant-Information eine zweite Grant-Anweisung ist, die Datenübertragung anzuhalten, wobei
die erste Grant-Anweisung verwendet wird, um anzuweisen, die Durchführung der Datenübertragung entsprechend dem derzeitigen aktiven Grant-Wert fortzusetzen, und die zweite Grant-Information verwendet wird, um das Anhalten der Durchführung der Datenübertragung anzuweisen.

## Revendications

1. Procédé d'émission d'une valeur d'attribution absolue, comprenant :
la réception, par un équipement utilisateur, d'un canal amélioré d'attribution absolue, E-AGCH, conventionnel, et d'un E-AGCH de détection de valeurs d'attribution nouvellement ajouté qui sont envoyés par un dispositif côté réseau ; et
la détection, par l'équipement utilisateur, d'informations d'attribution absolue, AG, portées sur au moins un canal de l'E-AGCH conventionnel et de l'E-AGCH de détection de valeurs d'attribution, et la commande de l'émission de données de l'équipement utilisateur en fonction d'un résultat de détection ;
la détection, par l'équipement utilisateur, d'informations AG d'attribution absolue portées sur au moins un canal de l'E-AGCH conventionnel et de l'E-AGCH de détection de valeurs d'attribution, et la commande de l'émission de données de l'équipement utilisateur en fonction d'un résultat de détection comprenant :
si l'équipement utilisateur détecte que l'au moins un canal de l'E-AGCH conventionnel et de l'E-AGCH de détection de valeurs d'attribution porte des premières informations AG de l'équipement utilisateur,
la commande, par l'équipement utilisateur, de l'émission de données en fonction des premières informations AG de l'équipement utilisateur.

2. Procédé selon la revendication 1, la commande, par l'équipement utilisateur, de l'émission de données en fonction des premières informations AG de l'équipement utilisateur si l'équipement utilisateur détecte que l'au moins un canal de l'E-AGCH conventionnel et de l'E-AGCH de détection de valeurs d'attribution porte les premières informations AG de l'équipement utilisateur, comprenant :
si l'équipement utilisateur détecte que l'E-AGCH conventionnel porte les premières informations AG de l'équipement utilisateur, la commande, par l'équipement utilisateur, de l'émission de données en fonction des premières informations AG de l'équipement utilisateur ; et
si l'équipement utilisateur détecte que l'E-AGCH conventionnel ne porte pas les premières informations AG de l'équipement utilisateur, et détecte que l'E-AGCH de détection de valeurs d'attribution porte les premières informations AG de l'équipement utilisateur, la commande, par l'équipement utilisateur, de l'émission de données en fonction des premières informations AG.

3. Procédé selon la revendication 1, la détection, par l'équipement utilisateur, d'informations d'attribution absolue, AG, portées sur au moins un canal de l'E-AGCH conventionnel et de l'E-AGCH de détection de valeurs d'attribution, et la commande de l'émission de données en cours de l'équipement utilisateur en fonction d'un résultat de détection comprenant :
si l'équipement utilisateur détecte que l'E-AGCH conventionnel ne porte pas les premières informations AG de l'équipement utilisateur et que l'E-AGCH de détection de valeurs d'attribution porte les secondes informations AG d'un autre équipement utilisateur à l'exception de l'équipement utilisateur,
l'omission d'effectuer, par l'équipement utilisateur, l'émission de données.

4. Équipement utilisateur, comprenant :
un module de réception, configuré pour recevoir un canal amélioré d'attribution absolue, E-AGCH, conventionnel, et un E-AGCH de détection de valeurs d'attribution nouvellement ajouté qui sont envoyés par un dispositif côté réseau ; et
un module de détection, configuré pour détecter des informations d'attribution absolue, AG, portées sur au moins un canal de l'E-AGCH conventionnel et de l'E-AGCH de détection de valeurs d'attribution, et commander l'émission de données de l'équipement utilisateur en fonction d'un résultat de détection ;
le module de détection étant configuré spécifiquement pour :
s'il est détecté que l'au moins un canal de l'E-AGCH conventionnel et de l'E-AGCH de détection de valeurs d'attribution porte les premières informations AG de l'équipement utilisateur,
commander l'émission de données en fonction des premières informations AG de l'équipement utilisateur.

5. Équipement utilisateur selon la revendication 4, le module de détection étant configuré spécifiquement pour :
s'il est détecté que l'E-AGCH conventionnel porte les premières informations AG de l'équipement utilisateur, commander l'émission de données en fonction des premières informations AG de l'équipement utilisateur ; et
s'il est détecté que l'E-AGCH conventionnel ne porte pas les premières informations AG de l'équipement utilisateur, et qu'il est détecté que l'E-AGCH de détection de valeurs d'attribution porte les premières informations AG de l'équipement utilisateur, commander l'émission de données en fonction des premières informations AG.

6. Équipement utilisateur selon la revendication 4, le module de détection étant configuré spécifiquement pour :
s'il est détecté que l'E-AGCH conventionnel ne porte pas les premières informations AG de l'équipement utilisateur et que l'E-AGCH de détection de valeurs d'attribution porte les secondes informations AG d'un autre équipement utilisateur à l'exception de l'équipement utilisateur,
omettre d'effectuer l'émission de données.

7. Procédé d'émission d'une valeur d'attribution absolue, comprenant :
la réception, par un équipement utilisateur, d'un canal amélioré d'attribution absolue, E-AGCH, nouvellement ajouté et d'un premier canal qui sont envoyés par un dispositif côté réseau, le premier canal étant un canal amélioré d'attribution relative, E-RGCH ; et
la détection, par l'équipement utilisateur, d'informations d'attribution absolue, AG, portées sur l'E-AGCH nouvellement ajouté et d'informations d'attribution portées sur le premier canal, et la commande de l'émission de données de l'équipement utilisateur en fonction d'un résultat de détection ;
lorsque l'équipement utilisateur détecte que l'E-AGCH nouvellement ajouté porte les premières informations AG de l'équipement utilisateur, l'équipement utilisateur commandant l'émission de données en fonction des premières informations AG.

8. Procédé selon la revendication 7, la détection, par l'équipement utilisateur, d'informations AG portées sur l'E-AGCH nouvellement ajouté et d'informations d'attribution portées sur le premier canal, et la commande de l'émission de données en cours de l'équipement utilisateur en fonction d'un résultat de détection comprenant :
la commande, par l'équipement utilisateur, de l'émission de données en fonction d'un résultat de détection des informations d'attribution portées sur le premier canal lorsque l'équipement utilisateur détecte que l'E-AGCH nouvellement ajouté porte des secondes informations AG d'un autre équipement utilisateur à l'exception de l'équipement utilisateur.

9. Procédé selon la revendication 8, la commande, par l'équipement utilisateur, de l'émission de données en fonction d'un résultat de détection des informations d'attribution portées sur le premier canal lorsque l'équipement utilisateur détecte que l'E-AGCH nouvellement ajouté porte des secondes informations AG d'un autre équipement utilisateur à l'exception de l'équipement utilisateur comprenant :
lorsque l'équipement utilisateur détecte que le premier canal porte les informations d'attribution, l'obtention, par l'équipement utilisateur, d'une valeur d'attribution de desserte mise à jour en fonction des informations d'attribution et d'une valeur d'attribution de desserte en cours, et la commande de l'émission de données en fonction de la valeur d'attribution de desserte mise à jour ; et
lorsque l'équipement utilisateur détecte que le premier canal ne porte pas les informations d'attribution, l'arrêt, par l'équipement utilisateur, de l'émission de données,
les informations d'attribution ordonnant d'augmenter ou de diminuer la valeur d'attribution de desserte en cours.

10. Procédé selon la revendication 8, la commande, par l'équipement utilisateur, de l'émission de données en fonction d'un résultat de détection des informations d'attribution portées sur le premier canal lorsque l'équipement utilisateur détecte que l'E-AGCH nouvellement ajouté porte des secondes informations AG d'un autre équipement utilisateur à l'exception de l'équipement utilisateur comprenant :
lorsque l'équipement utilisateur détecte que le premier canal porte les informations d'attribution, la commande, par l'équipement utilisateur, de l'émission de données en fonction des informations d'attribution, les informations d'attribution ordonnant de continuer à effectuer l'émission de données en fonction d'une valeur d'attribution de desserte en cours de l'équipement utilisateur ; ou
lorsque l'équipement utilisateur détecte que le premier canal ne porte pas les informations d'attribution, l'arrêt, par l'équipement utilisateur, de l'émission de données.

11. Procédé selon la revendication 8, la commande, par l'équipement utilisateur, de l'émission de données en fonction d'un résultat de détection des informations d'attribution portées sur le premier canal lorsque l'équipement utilisateur détecte que l'E-AGCH nouvellement ajouté porte des secondes informations AG d'un autre équipement utilisateur à l'exception de l'équipement utilisateur comprenant :
lorsque l'équipement utilisateur détecte que le premier canal porte les informations d'attribution, l'arrêt, par l'équipement utilisateur, de l'émission de données, les informations d'attribution ordonnant d'arrêter l'émission de données ; ou
lorsque l'équipement utilisateur détecte que le premier canal ne porte pas les informations d'attribution, le fait de continuer d'effectuer, par l'équipement utilisateur, l'émission de données en fonction d'une valeur d'attribution de desserte en cours.

12. Procédé selon la revendication 8, la commande, par l'équipement utilisateur, de l'émission de données en fonction d'un résultat de détection des informations d'attribution portées sur le premier canal lorsque l'équipement utilisateur détecte que l'E-AGCH nouvellement ajouté porte des secondes informations AG d'un autre équipement utilisateur à l'exception de l'équipement utilisateur comprenant :
lorsque l'équipement utilisateur détecte que le premier canal porte les informations d'attribution, et que les informations d'attribution sont une première instruction d'attribution, le fait de continuer d'effectuer par l'équipement utilisateur l'émission de données en fonction d'une valeur d'attribution de desserte en cours ; et
lorsque l'équipement utilisateur détecte que le premier canal porte les informations d'attribution, et que les informations d'attribution sont une seconde instruction d'attribution, l'arrêt, par l'équipement utilisateur, de l'émission de données,
la première instruction d'attribution ordonnant à l'équipement utilisateur de continuer à effectuer l'émission de données en fonction de la valeur d'attribution de desserte en cours, et la seconde instruction d'attribution ordonnant à l'équipement utilisateur d'arrêter d'effectuer l'émission de données.

13. Équipement utilisateur, comprenant :
un récepteur, configuré pour recevoir un canal amélioré d'attribution absolue, E-AGCH, nouvellement ajouté, et un premier canal qui sont envoyés par un dispositif côté réseau ; et
un processeur, configuré pour détecter des informations AG d'attribution absolue, portées sur l'E-AGCH nouvellement ajouté et des informations d'attribution portées sur le premier canal, et commander l'émission de données de l'équipement utilisateur en fonction d'un résultat de détection ;
le processeur étant spécifiquement configuré pour :
lorsqu'il est détecté que l'E-AGCH nouvellement ajouté porte les premières informations AG de l'équipement utilisateur, commander l'émission de données en fonction des premières informations AG.

14. Équipement utilisateur selon la revendication 13, le processeur étant configuré spécifiquement pour :
lorsqu'il est détecté que l'E-AGCH nouvellement ajouté porte les secondes informations AG d'un autre équipement utilisateur à l'exception de l'équipement utilisateur, commander l'émission de données en fonction d'un résultat de détection des informations d'attribution portées sur le premier canal.

15. Équipement utilisateur selon la revendication 14, lorsque le processeur détecte que l'E-AGCH nouvellement ajouté porte les secondes informations AG d'un autre équipement utilisateur à l'exception de l'équipement utilisateur, le processeur étant spécifiquement configuré pour :
lorsqu'il est détecté que le premier canal porte les informations d'attribution, obtenir une attribution de desserte mise à jour en fonction des informations d'attribution et d'une valeur d'attribution de desserte en cours, et commander l'émission de données en fonction de la valeur d'attribution de desserte mise à jour ; ou
lorsqu'il est détecté que le premier canal ne porte pas les informations d'attribution, arrêter l'émission de données,
les informations d'attribution ordonnant d'augmenter ou de diminuer la valeur d'attribution de desserte en cours.

16. Équipement utilisateur selon la revendication 14, lorsque le processeur détecte que l'E-AGCH nouvellement ajouté porte les secondes informations AG d'un autre équipement utilisateur à l'exception de l'équipement utilisateur, le processeur étant spécifiquement configuré pour :
lorsqu'il est détecté que le premier canal porte les informations d'attribution, commander l'émission de données en fonction des informations d'attribution ; ou
lorsqu'il est détecté que le premier canal ne porte pas les informations d'attribution, arrêter l'émission de données, les informations d'attribution ordonnant de continuer à effectuer l'émission en fonction d'une valeur d'attribution de desserte en cours de l'équipement utilisateur.

17. Équipement utilisateur selon la revendication 14, lorsque le processeur détecte que l'E-AGCH nouvellement ajouté porte les secondes informations AG d'un autre équipement utilisateur à l'exception de l'équipement utilisateur, le processeur étant spécifiquement configuré pour :
lorsqu'il est détecté que le premier canal porte les informations d'attribution, arrêter l'émission de données, les informations d'attribution ordonnant d'arrêter l'émission de données ; et
lorsqu'il est détecté que le premier canal ne porte pas les informations d'attribution, continuer à effectuer l'émission de données en fonction de la valeur d'attribution de desserte en cours.

18. Équipement utilisateur selon la revendication 14, lorsque le processeur détecte que l'E-AGCH nouvellement ajouté porte les secondes informations AG d'un autre équipement utilisateur à l'exception de l'équipement utilisateur, le processeur étant spécifiquement configuré pour :
lorsqu'il est détecté que le premier canal porte les informations d'attribution et que les informations d'attribution sont une première instruction d'attribution, continuer à effectuer l'émission de données en fonction d'une valeur d'attribution de desserte en cours ; et
lorsqu'il est détecté que le premier canal porte les informations d'attribution et que les informations d'attribution sont une seconde instruction d'attribution, arrêtez l'émission de données,
la première instruction d'attribution étant utilisée pour ordonner de continuer d'effectuer l'émission de données en fonction de la valeur d'attribution de desserte en cours, et la seconde instruction d'attribution étant utilisée pour ordonner d'arrêter d'effectuer l'émission de données.
